# EUROPEAN PATENT APPLICATION

(11) **EP 4 645 139 A1**
(43) Date of publication of application: **05.11.2025**
(21) Application number: 23911339.2
(22) Date of filing: 16.10.2023
(51) Int. Cl.: G06F 21/60, G06F 21/78

(54) **INFORMATION PROCESSING APPARATUS**

(30) Priority: 26.12.2022 JP 2022208965; 20.06.2023 JP 2023100945
(71) Applicant: Panasonic Intellectual Property Management Co., Ltd., Kadoma-shi, Osaka 571-0057 (JP)
(72) Inventor: TAKAHASHI, Katsunao, Kadoma-shi, Osaka 571-0057 (JP); KITAMIKADO, Masanori, Kadoma-shi, Osaka 571-0057 (JP)
(74) Representative: Grünecker Patent- und Rechtsanwälte PartG mbB
(86) International application number: PCT/JP2023/037435
(87) International publication number: WO 2024/142555

(57) **Abstract**

An erasure controller (14) obtains a first hash value calculated based on data stored or to be stored at a designated position in a storage area. The erasure controller (14) controls a storage device (13) to change a first encryption key stored in a nonvolatile memory (23) to a second encryption key. The erasure controller (14) calculates a second hash value based on data read from the designated position in the storage area. In a case where the second hash value is different from the first hash value, the erasure controller (14) outputs a verification result indicating that the data stored in the storage device (13) has been successfully erased. In a case where the second hash value is identical to the first hash value, the erasure controller (14) outputs a verification result indicating that erasure of the data stored in the storage device (13) has failed.

## Description

### TECHNICAL FIELD

The present disclosure relates to an information processing apparatus, an information processing method, an information processing system, and a program.

### BACKGROUND ART

In order to prevent leakage of confidential data when discarding an information processing apparatus, such as a personal computer, it is required to erase data stored in a storage device (or equivalently, make data inaccessible) and verify that the data has been reliably erased. For example, Patent Document 1 and Non-Patent Document 1 disclose how to verify data erasure.

### CITATION LIST

### PATENT DOCUMENTS

PATENT DOCUMENT 1: Japanese Patent No. JP 7096829 B2

### NON-PATENT DOCUMENTS

NON-PATENT DOCUMENT 1: Richard Kissel et al., "Guidelines for Media Sanitization", NIST Special Publication 800-88, Revision 1, National Institute of Standards and Technology, December 2014 [retrieved on December 1, 2022], Internet <URL: http://dx.doi.org/10.6028/NIST.SP.800-88r1>

### SUMMARY OF INVENTION

### TECHNICAL PROBLEM

Conventionally, in order to verify whether or not data has been successfully erased, current data stored in a storage device after the erasure (for example, pattern data or random data overwritten on original data) is compared with the original data stored in the storage device before the erasure. In this case, a large load is applied to an information processing apparatus in order to compare a large amount of data. Therefore, it is required to verify whether or not data has been successfully erased, with a smaller load than the prior art.

The present disclosure provides an information processing apparatus, an information processing method, an information processing system, and a program capable of verifying whether or not data stored in a storage device has been successfully erased, with a smaller load than the prior art.

### SOLUTION TO PROBLEM

According to one aspect of the present disclosure, an information processing apparatus is provided with: a storage device having a self-encrypting function of data to be stored; and an erasure controller that controls erasure of data stored in the storage device. The storage device is provided with: a storage medium having a storage area; a nonvolatile memory storing an encryption key; an input/output controller. The input/output controller writes input data to the storage area, outputs the data read from the storage area, encrypts at least a part of the data to be written to the storage area using the encryption key, and decrypts at least a part of the data read from the storage area using the encryption key. In a case where a first encryption key is stored in the nonvolatile memory, the erasure controller obtains a first hash value calculated based on data stored or to be stored at a designated position in the storage area. The erasure controller controls the storage device to change the first encryption key stored in the nonvolatile memory to a second encryption key. In a case where the second encryption key is stored in the nonvolatile memory, the erasure controller calculates a second hash value based on the data read from the designated position in the storage area. In a case where the second hash value is different from the first hash value, the erasure controller outputs a verification result indicating that the data stored in the storage device has been successfully erased. In a case where the second hash value is identical to the first hash value, the erasure controller outputs a verification result indicating that erasure of the data stored in the storage device has failed.

### ADVANTAGEOUS EFFECTS OF INVENTION

According to the information processing apparatus of one aspect of the present disclosure, it is possible to verify whether or not the data stored in the storage device has been successfully erased, with a smaller load than the prior art.

### BRIEF DESCRIPTION OF DRAWINGS

Fig. 1 is a block diagram showing a configuration of an information processing apparatus 1 according to a first embodiment.
Fig. 2 is a block diagram showing a configuration of a storage device 13 of Fig. 1.
Fig. 3 is a schematic diagram showing logical blocks 31 of a flash memory 24 of Fig. 2, the diagram showing an exemplary arrangement of the logical blocks 31 to be compared for verifying data erasure.
Fig. 4 is a flowchart showing an erasure process according to a comparison example 1.
Fig. 5 is a flowchart showing an erasure process according to a comparison example 2.
Fig. 6 is a flowchart showing an erasure process according to an implementation example 1, executed by an erasure controller 14 of Fig. 1.
Fig. 7 is a table for comparing verification methods according to the comparison example 1, the comparison example 2, and the implementation example 1 with each other.
Fig. 8 is a schematic diagram showing the logical blocks 31 of the flash memory 24 of Fig. 2, the diagram showing a first modification of an arrangement of the logical blocks 31 to be compared for verifying data erasure.
Fig. 9 is a schematic diagram showing the logical blocks 31 of the flash memory 24 of Fig. 2, the diagram showing a second modification of an arrangement of the logical blocks 31 to be compared for verifying data erasure.
Fig. 10 is a flowchart showing an erasure process according to an implementation example 2, executed by the erasure controller 14 of Fig. 1.
Fig. 11 is a flowchart showing an erasure process according to an implementation example 3, executed by the erasure controller 14 of Fig. 1.
Fig. 12 is a schematic diagram showing the logical blocks 31 of the flash memory 24 of Fig. 2, the diagram showing a case where all logical blocks 31 are compared for verifying data erasure.
Fig. 13 is a schematic diagram showing the logical blocks 31 of the flash memory 24 of Fig. 2, the diagram showing a case where the logical blocks 31 included in each of partial areas 24b-1 and 24b-2 are compared for verifying data erasure.
Fig. 14 is a schematic diagram showing the logical blocks 31 of the flash memory 24 of Fig. 2, the diagram showing a case where the logical blocks 31 included in each of partial areas 24c-1 to 24c-4 are compared for verifying data erasure.
Fig. 15 is a schematic diagram showing the logical blocks 31 of the flash memory 24 of Fig. 2, the diagram showing a case where the logical blocks 31 included in each of partial areas 24d-1 to 24d-8 are compared for verifying data erasure.
Fig. 16 is a block diagram showing a configuration of an information processing apparatus 1A according to a modification of the first embodiment.
Fig. 17 is a flowchart showing an erasure process executed by the information processing apparatus 1 according to a second embodiment.
Fig. 18 is a flowchart showing a subroutine of a preprocess (step S101) of Fig. 17.
Fig. 19 is a flowchart showing a subroutine of a key change process (step S102) of Fig. 17.
Fig. 20 is a flowchart showing a subroutine of a verification process (step S103) of Fig. 17.
Fig. 21 is a diagram showing an exemplary image showing the progress of data erasure, which is displayed on a display device 18 of Fig. 1 by executing the erasure process of Fig. 17.
Fig. 22 is a diagram showing another exemplary image showing the progress of data erasure, which is displayed on the display device 18 of Fig. 1 by executing the erasure process of Fig. 17.
Fig. 23 is a flowchart showing a first modification of the verification process of Fig. 17.
Fig. 24 is a flowchart showing a second modification of the verification process of Fig. 17.
Fig. 25 is a flowchart showing a third modification of the verification process of Fig. 17.
Fig. 26 is a block diagram showing a configuration of an information processing system according to a third embodiment, including the information processing apparatus 1 and a server apparatus.
Fig. 27 is a block diagram showing a configuration of the server apparatus 2 of Fig. 26.
Fig. 28 is a flowchart showing an erasure process executed by the server apparatus 2 of Fig. 26.
Fig. 29 is a flowchart showing an erasure process executed by the information processing apparatus 1 of Fig. 26.
Fig. 30 is a flowchart showing a modification of the erasure process executed by the server apparatus 2 of Fig. 26.
Fig. 31 is a flowchart showing a modification of the erasure process executed by the information processing apparatus 1 of Fig. 26.
Fig. 32 is a flowchart showing a subroutine of a preprocess (step S231) of Fig. 31.
Fig. 33 is a flowchart showing a subroutine of a key change process (step S232) of Fig. 31.
Fig. 34 is a flowchart showing a subroutine of a verification process (step S233) of Fig. 31.

### DESCRIPTION OF EMBODIMENTS

Hereinafter, embodiments will be described in detail with reference to the drawings as appropriate. However, excessively detailed explanation may be omitted. For example, detailed explanation of well-known matters may be omitted, and redundant explanations on substantially the same configuration may be omitted. This is to avoid the unnecessary redundancy of the following description, and to facilitate understanding by those skilled in the art.

It is to be noted that the inventor(s) intends to provide the accompanying drawings and the following description so that those skilled in the art can sufficiently understand the present disclosure, and does not intend to limit subject matters recited in the claims.

### [FIRST EMBODIMENT]

### [CONFIGURATION OF FIRST EMBODIMENT]

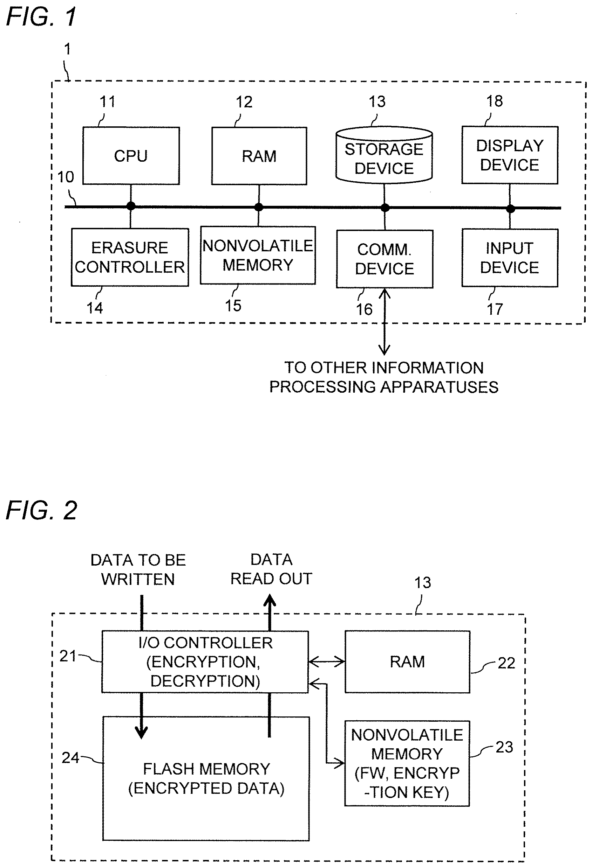

Fig. 1 is a block diagram showing a configuration of an information processing apparatus 1 according to a first embodiment. The information processing apparatus 1 is provided with a bus 10, a central processing unit (CPU) 11, a random access memory (RAM) 12, a storage device 13, an erasure controller 14, a nonvolatile memory 15, a communication device 16, an input device 17, and a display device 18.

The CPU 11 controls entire operations of the information processing apparatus 1.

The RAM 12 temporarily stores programs and data necessary for the operations of the information processing apparatus 1.

The storage device 13 stores data including an operating system, application programs, and user data. The storage device 13 is a self-encrypting drive (SED) with a self-encrypting function for data to be stored, and is, for example, a solid state drive (SSD) with the self-encrypting function.

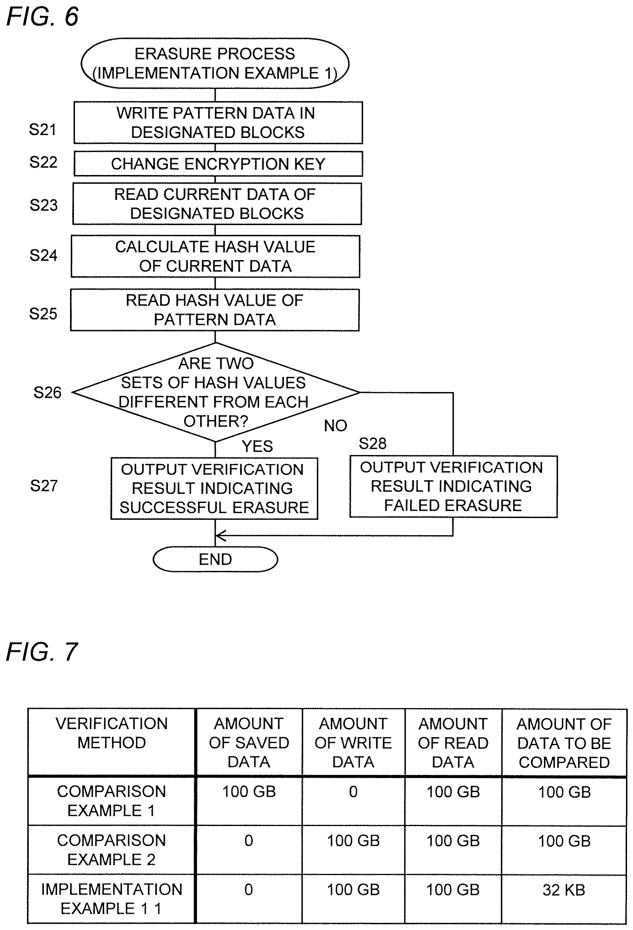

The erasure controller 14 controls erasure of data stored in the storage device 13 by executing an erasure process to be described later with reference to Fig. 6 and others. In the present disclosure, "erasure" means making at least some data stored in the storage device 13 inaccessible. The erasure controller 14 includes, for example, a microprocessor.

The nonvolatile memory 15 stores a program and data necessary for execution of the erasure process. The nonvolatile memory 15 includes, for example, a nonvolatile storage medium, such as a flash memory.

The program for the erasure process may be incorporated in a firmware program of the information processing apparatus 1, such as a unified extensible firmware interface (UEFI) program or a basic input/output system (BIOS) program. In this case, the program for the erasure process may be stored in the same storage medium as that of the UEFI or BIOS program, and may be executed by the same microprocessor as that of the UEFI or BIOS program.

The communication device 16 is communicably connected to other external information processing apparatuses via a communication line, such as a local area network (LAN).

The input device 17 receives user inputs for controlling the operations of the information processing apparatus 1. The input device 17 includes, for example, a keyboard and a pointing device.

The display device 18 displays information related to the status of the information processing apparatus 1, for example, information related to erasure of data stored in the storage device 13.

The CPU 11, the RAM 12, the storage device 13, the erasure controller 14, the nonvolatile memory 15, the communication device 16, the input device 17, and the display device 18 are connected to each other via the bus 10.

The information processing apparatus 1 is, for example, a personal computer.

Fig. 2 is a block diagram showing a configuration of the storage device 13 of Fig. 1. The storage device 13 is provided with an input/output (I/O) controller 21, a random access memory (RAM) 22, a nonvolatile memory 23, and a flash memory 24. The input/output controller 21 controls writing and reading of data to and from the storage device 13. The RAM 22 is a buffer memory that temporarily stores data to be written to the storage device 13, and data read from the storage device 13. The nonvolatile memory 23 stores a firmware program (FW) of the storage device 13, and an encryption key. The flash memory 24 is a nonvolatile storage medium having a storage area. The input/output controller 21 controls operations of the storage device 13 by executing the firmware program stored in the nonvolatile memory 23. The input/output controller 21 writes input data to the storage area of the flash memory 24, and outputs data read from the storage area.

As described above, the storage device 13 has the self-encrypting function. The storage device 13 may encrypt and decrypt data stored in the entire storage area of the flash memory 24, or may encrypt and decrypt data stored in only a part of the storage area. The input/output controller 21 encrypts at least a part of data to be written in the storage area of the flash memory 24, using the encryption key stored in the nonvolatile memory 23. In addition, the input/output controller 21 decrypts at least a part of the data read from the storage area of the flash memory 24, using the encryption key. The input/output controller 21 may use hardware, software, or a combination thereof for encrypting and decrypting data.

With the storage device 13, the information processing apparatus 1 can encrypt and decrypt data stored in the storage device 13, without using the operating system and the application programs.

In the storage device 13 having the self-encrypting function, when the encryption key has been changed, data encrypted using the encryption key before the change and stored in the storage area of the flash memory 24 can not be decrypted using the encryption key after the change. Therefore, by changing the encryption key of the storage device 13, the original data stored in the storage device 13 becomes inaccessible, and equivalently, the original data stored in the storage device 13 can be erased (cryptographic erasure). The input/output controller 21 changes the encryption key stored in the nonvolatile memory 23, under the control of the erasure controller 14. The encryption key may be changed, for example, by the input/output controller 21 executing a REVERT command included in the firmware of the storage device 13.

In a case where data stored in only a partial area of the storage area is encrypted and decrypted as described above, data not encrypted and decrypted does not become inaccessible even when the encryption key is changed, and thus, it is not erased. In order to verify whether or not data has been successfully erased, the erasure controller 14 compares the current data stored in the storage device 13 after changing the encryption key, with the original data stored in the storage device 13 before changing the encryption key. In a case where the current data is different from the original data, the erasure controller 14 determines that the data has been successfully erased, and in a case where the current data is identical to the original data, the erasure controller 14 determines that the data erasure has failed.

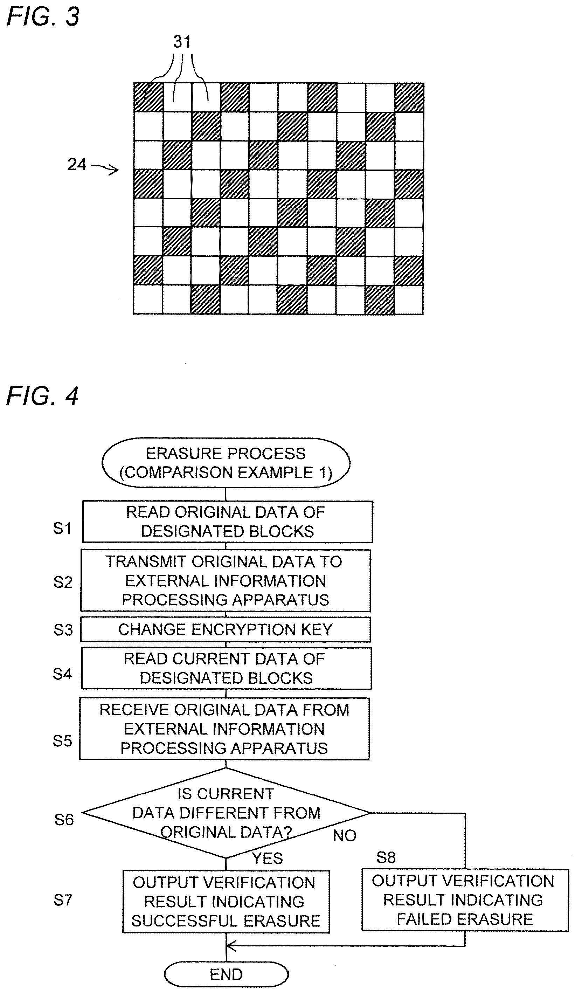

Fig. 3 is a schematic diagram showing logical blocks 31 of the flash memory 24 of Fig. 2, the diagram showing an exemplary arrangement of the logical blocks 31 to be compared for verifying data erasure. The storage area of the flash memory 24 includes a plurality of logical blocks 31. Each logical block 31 is a partial area logically divided from the storage area. For example, a storage area of 1 TB may be divided into 10000 logical blocks 31, each having a size of 100 MB. In order to verify whether or not data has been successfully erased, the erasure controller 14 may compare the data before and after the change of the encryption key, over the entire storage area, or over a part of the storage area (for example, 1000 logical blocks 31 corresponding to 10% of the entire storage area). In the latter case, the logical blocks 31 to be compared may be designated according to a predetermined rule (for example, hatched logical blocks 31 in Fig. 3), or may be designated randomly.

Although Fig. 3 and others show the storage area of the flash memory 24 in a two-dimensional manner, the storage area may be considered as a continuous and sequential memory space.

### [COMPARISON EXAMPLE]

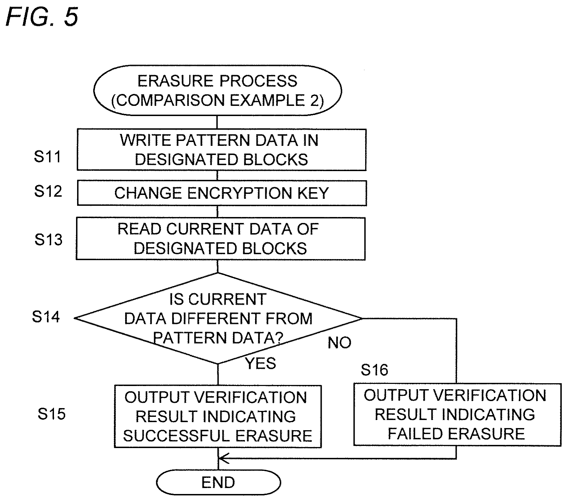

Now, with reference to Figs. 4 and 5, we will describe verification of data erasure according to the prior art. For description, it is assumed the case where the information processing apparatus 1 of Fig. 1 executes erasure processes shown in Figs. 4 and 5.

Fig. 4 is a flowchart showing an erasure process according to a comparison example 1. Fig. 4 shows a method for verifying data erasure as disclosed in Non-Patent Document 1.

The erasure process of Fig. 4 or others is started, for example, when erasure of data stored in the storage device 13 is instructed via the BIOS or UEFI program.

In step S1, the erasure controller 14 reads the original data of the logical blocks 31, for example, the logical blocks 31 being designated as shown in Fig. 3. Here, the "original data" indicates data read from the designated logical blocks 31 in the storage area, in a case where the encryption key before the change is stored in the nonvolatile memory 23. In a case where the logical blocks 31 are to be encrypted and decrypted, the erasure controller 14 obtains data decrypted using the encryption key before the change. On the other hand, in a case where the logical blocks 31 are not to be encrypted and decrypted, the erasure controller 14 just obtains data read from the logical blocks 31 without decryption. In general, for example, in a case where the RAM 12 has a size of several GB to several tens of GB, the storage device 13 has a storage area of 1 TB, and data in 10% of the storage area, that is, 100 GB data is to be read, all the data cannot be stored in the RAM 12. Therefore, in step S2, the erasure controller 14 transmits the original data to an external information processing apparatus in order to temporarily save the original data.

In step S3, the erasure controller 14 changes the encryption key stored in the nonvolatile memory 23. In the present description, the encryption key before the change is also referred to as a "first encryption key", and the encryption key after the change is also referred to as a "second encryption key".

In step S4, the erasure controller 14 reads the current data of the same designated logical blocks 31 as those of step S1. Here, the "current data" indicates data read from the designated logical blocks 31 in the storage area, in a case where the encryption key after the change is stored in the nonvolatile memory 23. In a case where the logical blocks 31 are to be encrypted and decrypted, the erasure controller 14 obtains data decrypted using the encryption key after the change. On the other hand, in a case where the logical blocks 31 are not to be encrypted and decrypted, the erasure controller 14 just obtains data read from the logical blocks 31 without decryption.

In step S5, the erasure controller 14 receives the original data, which has been temporarily saved, from the external information processing apparatus.

In step S6, the erasure controller 14 determines whether or not the current data is different from the original data: if YES, the process proceeds to step S7; if NO, the process proceeds to step S8. Here, since the current data is compared with the original data per each logical block 31, the step can be executed using the RAM 12 having a size of several GB to several tens of GB.

In step S7, the erasure controller 14 outputs a verification result indicating that the data has been successfully erased, to the display device 18. In step S8, the erasure controller 14 outputs a verification result indicating that the data erasure has failed, to the display device 18.

According to the process of Fig. 4, since a large amount of data that cannot be stored in the RAM 12 is compared, the external information processing apparatus is required to temporarily save the data. Therefore, it is required to provide a method for verifying data erasure, that can be executed by only the information processing apparatus 1, without requiring the external information processing apparatus.

Fig. 5 is a flowchart showing an erasure process according to a comparison example 2. Fig. 5 shows a method for verifying data erasure as disclosed in Patent Document 1.

In step S11, the erasure controller 14 writes known pattern data to the logical blocks 31, for example, the logical blocks 31 being designated as shown in Fig. 3. The pattern data includes, for example, a bit string of all 1s, a bit string of all 0s, a random bit string, or the like. The pattern data is stored in advance in the nonvolatile memory 15. The pattern data is encrypted using the encryption key before the change, and written in the designated logical blocks 31 of the storage area.

In step S12, the erasure controller 14 changes the encryption key stored in the nonvolatile memory 23.

In step S13, the erasure controller 14 reads the current data of the same designated logical blocks 31 as those of step S11.

In step S14, the erasure controller 14 determines whether or not the current data is different from the pattern data: if YES, the process proceeds to step S15; if NO, the process proceeds to step S16.

In step S15, the erasure controller 14 outputs a verification result indicating that the data has been successfully erased, to the display device 18. Further, in step S16, the erasure controller 14 outputs a verification result indicating that the data erasure has failed, to the display device 18.

As described above, in a case where the encryption key before the change is stored in the nonvolatile memory 23, the pattern data is written to the designated logical blocks 31 in the storage area. Therefore, the pattern data substantially corresponds to the "original data" of the process of Fig. 4, that is, the data read from the designated logical blocks 31 in the storage area in a case where the encryption key before the change is stored in the nonvolatile memory 23.

According to the process of Fig. 5, by using the known pattern data, the process can be executed by only the information processing apparatus 1, without requiring the external information processing apparatus. However, according to the process of Fig. 5, a large load is applied to the information processing apparatus 1 in order to compare a large amount of data, in a manner similar to that of the process of Fig. 4. Therefore, it is required to provide an erasure process capable of verifying whether or not data has been successfully erased, with a smaller load.

Next, we will describe an erasure process according to the embodiment, which is capable of verifying whether or not data has been successfully erased, with a smaller load.

### [IMPLEMENTATION EXAMPLE 1]

Fig. 6 is a flowchart showing an erasure process according to an implementation example 1, executed by the erasure controller 14 of Fig. 1.

In step S21, the erasure controller 14 writes known pattern data to the logical blocks 31, for example, the logical blocks 31 being designated as shown in Fig. 3. The nonvolatile memory 15 stores pattern data, and also stores in advance a hash value of the pattern data, the hash value being calculated using an arbitrary hash function. The hash function may be, for example, SHA-2 function, such as SHA-256. The SHA-256 function generates a 256-bit (32 bytes) hash value from data having an arbitrary length of up to 2⁽⁶⁴⁻¹⁾ bits.

In step S22, the erasure controller 14 changes the encryption key stored in the nonvolatile memory 23.

In step S23, the erasure controller 14 reads the current data of the same designated logical blocks 31 as those of step S21. Then, in step S24, the erasure controller 14 calculates a hash value of the current data using the same hash function as that used to calculate the hash value of the pattern data.

In step S25, the erasure controller 14 reads the hash value of the pattern data from the nonvolatile memory 15.

In step S26, the erasure controller 14 determines whether or not the hash value of the current data is different from the hash value of the pattern data: if YES, the process proceeds to step 27; if NO, the process proceeds to step 28.

Different hash values of data may collide. However, it is considered that there is a very low possibility that the hash value of the pattern data and the hash value of the current data collide in every logical blocks 31 to be compared. Therefore, for example, in a case where hash values are compared in the 1000 logical blocks 31, the erasure controller 14 may determine that the data has been successfully erased, even when the hash values match in several logical blocks 31. Further, in a case where the hash values differ in half or more of the logical blocks 31, the erasure controller 14 may determine that the data has been successfully erased.

In addition, in a case where the hash value of the pattern data and the hash value of the current data match in several logical blocks 31 close to each other, the erasure controller 14 may determine that the data erasure has failed. In this case, it is considered that the area including these logical blocks 31 is not to be encrypted and decrypted.

In step S27, the erasure controller 14 outputs a verification result indicating that the data has been successfully erased, to the display device 18. Further, in step S28, the erasure controller 14 outputs a verification result indicating that the data erasure has failed, to the display device 18.

Fig. 7 is a table for comparing verification methods according to the comparison example 1, the comparison example 2, and the implementation example 1 with each other. It is assumed that the storage device 13 has a storage area of 1 TB, and the storage area of 1 TB is divided into 10000 logical blocks 31 each having a size of 100 MB. In addition, it is assumed to read and verify 10% of the storage area, that is, 100 GB data in total of 1000 logical blocks 31. According to the comparison example 1, it is necessary to temporarily save 100 GB data to the external information processing apparatus. In addition, according to the comparison examples 1 and 2, it is necessary to compare 100 GB data before and after the change of the encryption key, with each other. On the other hand, according to the implementation example 1, in a case where the SHA-256 function is used, the data of each logical block 31 is represented by a 32-byte hash value. Therefore, according to the implementation example 1, it is not necessary to temporarily save the data to an external information processing apparatus, and it is only necessary to compare 32 KB data in total, as the data before and after the change of the encryption key. As described above, according to the implementation example 1, it is possible to verify whether or not the data has been successfully erased, with a small load.

In a case where 10% of data in the storage area is read and verified, data of one of every 10 logical blocks 31 may be designated. In addition, in a case where 5% of data in the storage area is read and verified, data of one of every 20 logical block 31 may be designated. In a case where the storage area is divided into 10000 logical blocks 31, and 10% of the storage area, that is, data of 1000 logical blocks 31 is read and verified, the hash values of the data have a size of 32 KB in total. In addition, in a case where the storage area is divided into 1000 logical blocks 31, and 10% of the storage area, that is, data of 100 logical blocks 31 is read and verified, the hash values of the data have a size of 3200 bytes in total. In addition, in a case where the storage area is divided into 10000 logical blocks 31, and 5% of the storage area, that is, data of 500 logical blocks 31 is read and verified, the hash values of the data have a size of 16 KB in total. In addition, in a case where the storage area is divided into 1000 logical blocks 31, and 5% of the storage area, that is, data of 50 logical blocks 31 is read and verified, the hash values of the data have a size of 1600 bytes in total. In any case, the size of the data to be compared is much smaller than those of the comparison example 1 and the comparison example 2.

In a case where the logical blocks 31 to be compared are randomly designated, it is further necessary to store the addresses of the logical blocks 31. In a case where the storage area is divided into 10000 or 1000 logical blocks 31, the address (0 to 9999 or 0 to 999) of each logical block 31 is represented by 2 bytes. Therefore, in a case where data of 1000, 500, 100, or 50 logical blocks 31 is read and verified, the total size of the stored addresses is 2000 bytes, 1000 bytes, 200 bytes, or 100 bytes. In any case, the size of the stored address is relatively small.

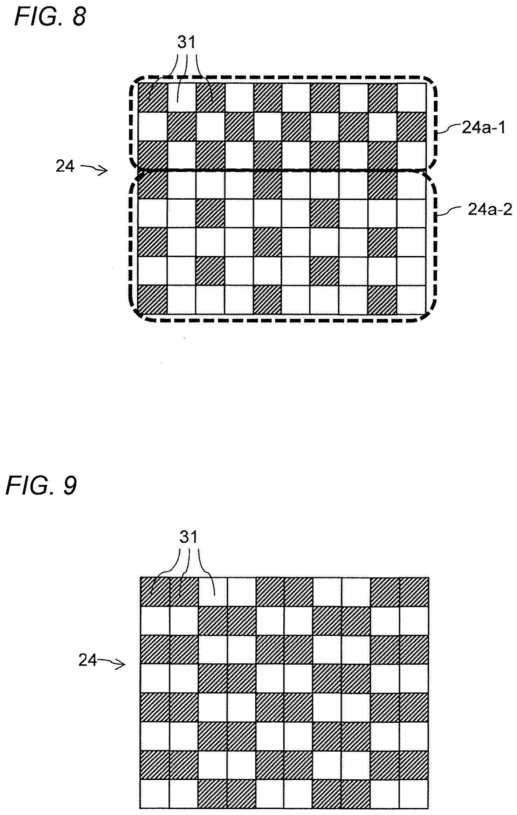

Fig. 8 is a schematic diagram showing the logical blocks 31 of the flash memory 24 of Fig. 2, the diagram showing a first modification of an arrangement of the logical blocks 31 to be compared for verifying data erasure. The storage area may include a plurality of partial areas 24a-1 to 24a-2 logically divided from the storage area, each of the partial areas 24a-1 to 24a-2 including a plurality of logically sequential logical blocks 31. In the example of Fig. 8, the partial area 24a-1 has a smaller logical address than that of a logical address of the partial area 24a-2. For each of the partial areas 24a-1 to 24a-2, the erasure controller 14 may designate a number of logical blocks 31 with a ratio to the logical blocks 31 included in the partial area, the ratio being different for the partial area (for example, hatched logical blocks 31 of Fig. 8). The hash values are calculated based on data stored in the designated logical blocks 31. It is considered that there is a high possibility that important files of the information processing apparatus 1 (for example, confidential data, such as a login password to enter the information processing apparatus 1) are stored in logical blocks 31 having small logical addresses. Therefore, the erasure controller 14 may designate the logical blocks 31 with a larger ratio for the partial area 24a-1, than a ratio for the partial area 24a-2. By designating the logical blocks 31 as shown in Fig. 8, it is possible to more reliably verify erasure of data stored in the area considered to include the important files of the information processing apparatus 1.

The storage area of the storage device 13 may be divided into not only two partial areas 24a-1 to 24a-2, but also three or more partial areas.

Fig. 9 is a schematic diagram showing the logical blocks 31 of the flash memory 24 of Fig. 2, the diagram showing a second modification of an arrangement of the logical blocks 31 to be compared for verifying data erasure. The erasure controller 14 may designate logical blocks 31 logically adjacent to each other (for example, hatched logical blocks 31 of Fig. 9). Each hash value is calculated based on data stored in the logical blocks 31 logically adjacent to each other. Each hash value may be calculated based on a logical product, a logical sum, or an exclusive logical sum of data stored in two logical blocks 31 logically adjacent to each other. By designating the logical blocks 31 as shown in Fig. 9, there is a possibility of avoiding collision of hash values.

### [IMPLEMENTATION EXAMPLE 2]

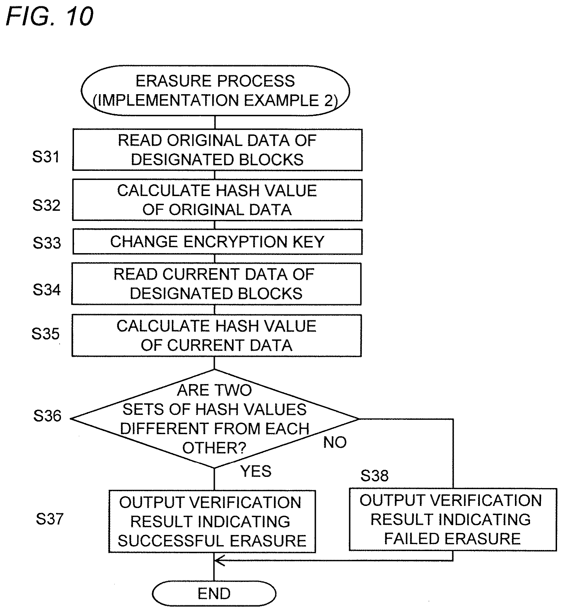

Fig. 10 is a flowchart showing an erasure process according to an implementation example 2, executed by the erasure controller 14 of Fig. 1.

In step S31, the erasure controller 14 reads the original data of the logical blocks 31, for example, the logical blocks 31 being designated as shown in Fig. 3, Fig. 8, or Fig. 9. Then, in step S32, the erasure controller 14 calculates a hash value of the original data. One hash value may be calculated per each logical block 31, or one hash value may be calculated per a predetermined number of logical blocks 31. In the latter case, the RAM 12 includes a buffer memory for storing the read data. The buffer memory has a size of, for example, 10 times that of the logical block 31. The erasure controller 14 sequentially writes the read data to the buffer memory, and calculates the hash value of the data when the buffer memory becomes full. Since the information processing apparatus 1 is not powered off during the execution of the process of Fig. 10 (in particular, before and after changing the encryption key), the calculated hash value may be stored in the RAM 12. Further, the calculated hash value may be stored in the nonvolatile memory 15.

In step S33, the erasure controller 14 changes the encryption key stored in the nonvolatile memory 23.

In step S34, the erasure controller 14 reads the current data of the same designated logical blocks 31 as those of step S31. Then, in step S35, the erasure controller 14 calculates a hash value of the current data using the same hash function as that used to calculate the hash value of the original data. In a manner similar to that of calculating the hash value of the original data, one hash value may be calculated per each logical block 31, or one hash value may be calculated per the predetermined number of logical blocks 31. As a result, for the same one or more logical blocks 31, the hash value of the original data is calculated (step S32), and the hash value of the current data is calculated (step S35).

In step 36, the erasure controller 14 determines whether or not the hash value of the current data is different from the hash value of the original data: if YES, the process proceeds to step S37; if NO, the process proceeds to step S38.

As described above, different hash values of data may collide. However, it is considered that there is a very low possibility that the hash value of the original data and the hash value of the current data collide in every logical blocks 31 to be compared. Therefore, for example, in a case where hash values are compared in the 1000 logical blocks 31, the erasure controller 14 may determine that the data has been successfully erased, even when the hash values match in several logical blocks 31. In addition, in a case where the hash values differ in half or more of the logical blocks 31, the erasure controller 14 may determine that the data has been successfully erased.

In addition, in a case where the hash value of the original data and the hash value of the current data match in several logical blocks 31 close to each other, the erasure controller 14 may determine that the data erasure has failed. In this case, it is considered that the area including these logical blocks 31 is not to be encrypted and decrypted.

In step S37, the erasure controller 14 outputs a verification result indicating that the data has been successfully erased, to the display device 18. Further, in step S38, the erasure controller 14 outputs a verification result indicating that the data erasure has failed, to the display device 18.

According to the implementation example 2, it is not necessary to temporarily save data to an external information processing apparatus, and it is only necessary to compare the hash values, as the data before and after the change of the encryption key, in a manner similar to that of the implementation example 1. As described above, according to the implementation example 2, it is possible to verify whether or not the data has been successfully erased, with a small load.

In general, a solid state drive takes a longer time to write data than that of reading data. According to the process of Fig. 10, since it is not necessary to write the pattern data in the storage device 13, so that the processing time can be shortened as compared with that of Fig. 6.

In addition, in the case of calculating one hash value per the plurality of logical blocks 31, the amount of computation is reduced and the processing speed is improved as compared with the case of calculating one hash value per each logical block 31, and in addition, the storage capacity required for storing the calculated hash value is reduced.

### [IMPLEMENTATION EXAMPLE 3]

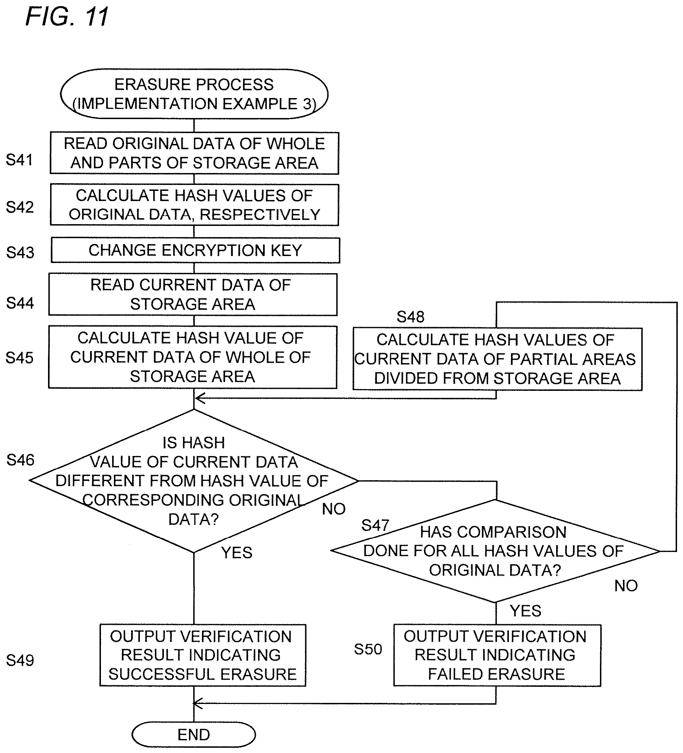

Fig. 11 is a flowchart showing an erasure process according to an implementation example 3, executed by the erasure controller 14 of Fig. 1.

In step S41, the erasure controller 14 reads the original data of the whole and parts of the storage area. The storage area includes a plurality of partial areas logically divided from the storage area with different sizes. The original data is read from the entire storage area and from respective partial areas with different sizes. In step S42, for the entire storage area, and for each of the partial areas with the different sizes, the erasure controller 14 calculates a hash value of the original data stored in each area.

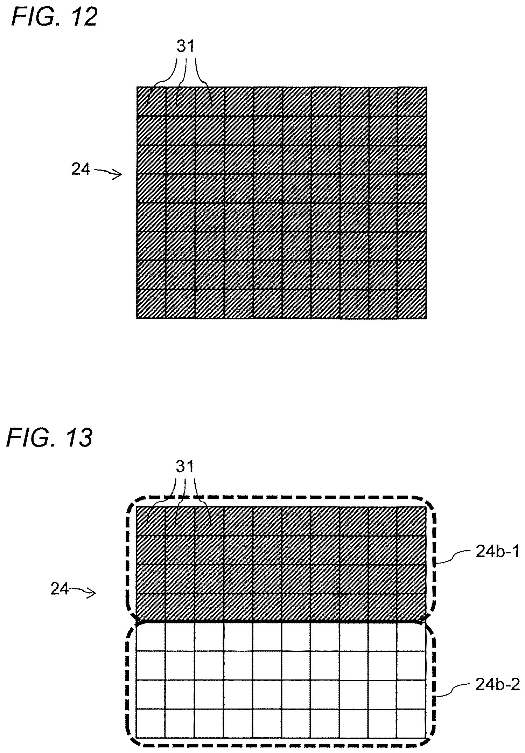

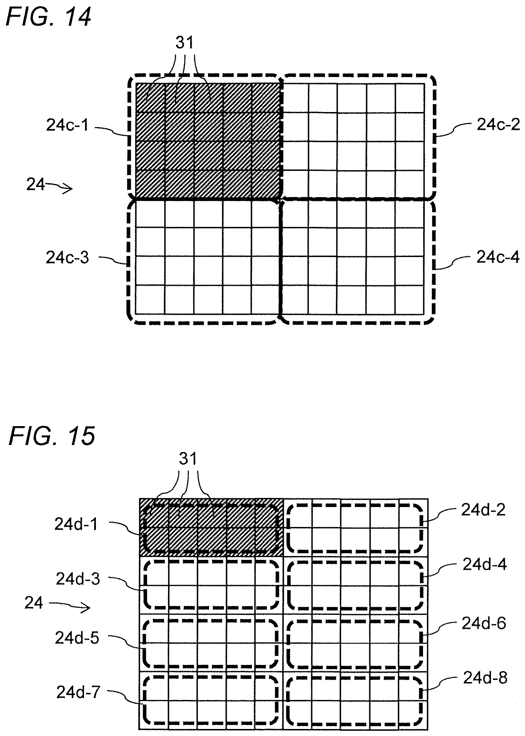

Fig. 12 is a schematic diagram showing the logical blocks 31 of the flash memory 24 of Fig. 2, the diagram showing a case where all logical blocks 31 are compared for verifying data erasure. Fig. 13 is a schematic diagram showing the logical blocks 31 of the flash memory 24 of Fig. 2, the diagram showing a case where the logical blocks 31 included in each of partial areas 24b-1 and 24b-2 are compared for verifying data erasure. Fig. 14 is a schematic diagram showing the logical blocks 31 of the flash memory 24 of Fig. 2, the diagram showing a case where the logical blocks 31 included in each of partial areas 24c-1 to 24c-4 are compared for verifying data erasure. Fig. 15 is a schematic diagram showing the logical blocks 31 of the flash memory 24 of Fig. 2, the diagram showing a case where the logical blocks 31 included in each of partial areas 24d-1 to 24d-8 are compared for verifying data erasure. In the case of Fig. 12, one hash value is calculated for the entire storage area. In the case of Fig. 13, the entire storage area is divided into two partial areas 24b-1 and 24b-2, and one hash value is calculated for each of the partial areas 24b-1 and 24b-2. In the case of Fig. 14, the entire storage area is divided into four partial areas 24c-1 to 24c-4, and one hash value is calculated for each of the partial areas 24c-1 to 24c-4. In the case of Fig. 15, the entire storage area is divided into eight partial areas 24d-1 to 24d-8, and one hash value is calculated for each of the partial areas 24d-1 to 24d-8. In a manner similar to those of Figs. 12 to 15, a hash value may be calculated for each of the further subdivided partial areas.

In step S43 of Fig. 11, the erasure controller 14 changes the encryption key stored in the nonvolatile memory 23.

In step S44, the erasure controller 14 reads the current data in the storage area. Then, in step S45, the erasure controller 14 calculates a hash value of the current data of the entire storage area.

In step S46, the erasure controller 14 determines whether or not the hash value of the current data is different from the hash value of the corresponding original data calculated in step S42: if YES, the process proceeds to step S49 and if NO, the process proceeds to step S47.

In step S47, the erasure controller 14 determines whether or not the comparison has done for all the hash values of the original data calculated in step S42: if YES, the process proceeds to step S50; if NO, the process proceeds to step S48.

In step S48, the erasure controller 14 calculates a hash value of the current data of each partial area divided from the storage area. In a case of executing step 48 for the first time, the erasure controller 14 calculates a hash value of the current data for each of the two partial areas 24b-1 and 24b-2 divided from the storage area. In a case of executing step S48 for the second time, the erasure controller 14 calculates a hash value of the current data for each of the four partial areas 24c-1 to 24c-4 divided from the storage area. Thereafter, the erasure controller 14 similarly repeats step S48 until YES in step S46 or S47, to calculate a hash value of the current data of each partial area.

In step S49, the erasure controller 14 outputs a verification result indicating that the data has been successfully erased, to the display device 18. Further, in step S50, the erasure controller 14 outputs a verification result indicating that the data erasure has failed, to the display device 18.

According to the process of Fig. 11, even when the collision between the hash value of the original data and the hash value of the current data occurs in a partial area, the collision of the hash values may be avoided by comparing the hash values of a smaller partial area.

### [MODIFICATION OF FIRST EMBODIMENT]

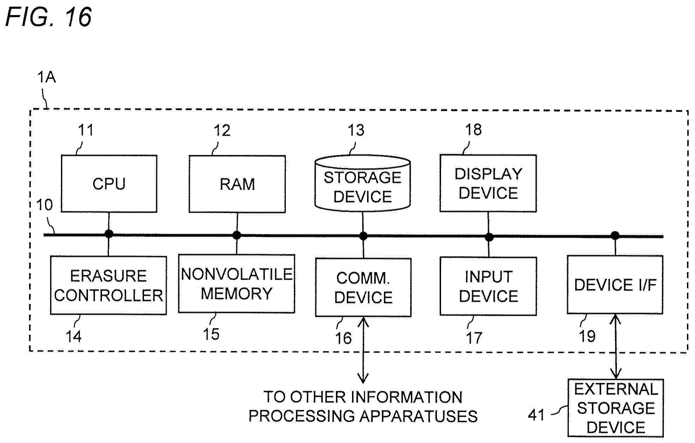

Fig. 16 is a block diagram showing a configuration of an information processing apparatus 1A according to a modification of the first embodiment. The information processing apparatus 1A is provided with the components of an information processing apparatus 1 of Fig. 1, and further provided with a device interface (I/F) 19 for connecting to an external device. The device interface 19 is, for example, a USB. In the example of Fig. 16, the device interface 19 is connected to an external storage device 41, such as a USB memory, a solid state drive, or a hard disk drive.

The program for the erasure process as described with reference to Fig. 6 and others may be stored in the external storage device 41, instead of being stored in the nonvolatile memory 15. In this case, an erasure controller 14 reads the program for the erasure process from the external storage device 41, and executes the program. Further, the program for the erasure process may be divided into a plurality of parts, a part of the program may be stored in the nonvolatile memory 15, and another part of the program may be stored in the external storage device 41. In this case, the partial program stored in the nonvolatile memory 15 is called and executed by executing the partial program stored in the external storage device 41.

For example, in a case where the information processing apparatus 1A executes the erasure process according to the implementation example 2, the calculated hash value of the original data may be stored in the external storage device 41, instead of being stored in the RAM 12 or the nonvolatile memory 15. Since it is difficult to guess the original data from the hash value, there is a low possibility of leakage of confidential data, even when the external storage device 41 is lost or stolen.

The calculated hash value of the original data may be transmitted to and stored in an external information processing apparatus connected via the communication device 16. In addition, the information processing apparatuses 1 and 1A may be further provided with a drive device for a storage medium, such as a CD or a DVD, and in this case, the calculated hash value of the original data may be stored in the CD, the DVD, or the like.

### [ADVANTAGEOUS EFFECTS AND OTHERS OF FIRST EMBODIMENT]

An information processing apparatus 1 of the first embodiment is provided with: a storage device 13 having a self-encrypting function of data to be stored; and an erasure controller 14 that controls erasure of data stored in the storage device 13. The storage device 13 is provided with: a storage medium having a storage area; a nonvolatile memory 23 storing an encryption key; an input/output controller 21. The input/output controller 21 writes input data to the storage area, outputs the data read from the storage area, encrypts at least a part of the data to be written to the storage area using the encryption key, and decrypts at least a part of the data read from the storage area using the encryption key. In a case where a first encryption key is stored in the nonvolatile memory 23, the erasure controller 14 obtains a first hash value calculated based on data stored or to be stored at a designated position in the storage area. The erasure controller 14 controls the storage device 13 to change the first encryption key stored in the nonvolatile memory 23 to a second encryption key. In a case where the second encryption key is stored in the nonvolatile memory 23, the erasure controller 14 calculates a second hash value based on the data read from the designated position in the storage area. In a case where the second hash value is different from the first hash value, the erasure controller 14 outputs a verification result indicating that the data stored in the storage device 13 has been successfully erased. In a case where the second hash value is identical to the first hash value, the erasure controller 14 outputs a verification result indicating that erasure of the data stored in the storage device 13 has failed.

With such a configuration, it is possible to verify whether or not the data stored in the storage device 13 has been successfully erased, with a smaller load than the prior art.

According to the information processing apparatus 1 of the first embodiment, the erasure controller 14 may control the storage device 13 to store predetermined pattern data at the designated position in the storage area. In this case, the first hash value is calculated based on the pattern data.

With such a configuration, it is possible to verify data erasure without temporarily saving data to an external information processing apparatus.

According to the information processing apparatus 1 of the first embodiment, the erasure controller 14 may calculate the first hash value based on the data read from the designated position in the storage area.

With such a configuration, it is possible to verify data erasure without temporarily saving data to an external information processing apparatus.

According to the information processing apparatus 1 of the first embodiment, the storage area may include a plurality of blocks. In this case, per predetermined number of blocks, the first and second hash values are calculated based on data stored in the predetermined number of blocks.

With such a configuration, the amount of computation is reduced and the processing speed is improved as compared with the case of calculating one hash value per each logical block 31, and in addition, the storage capacity required for storing the calculated hash value is reduced.

According to the information processing apparatus 1 of the first embodiment, the storage area may include a plurality of partial areas logically divided from the storage area, each of the partial areas including a plurality of logically sequential blocks. In this case, for each of the partial areas, the erasure controller 14 designates a number of blocks with a ratio to the blocks included in the partial area, the ratio being different for the partial area. The first and second hash values are calculated based on data stored in the designated blocks.

With such a configuration, it is possible to more reliably verify erasure of data stored in the area considered to include the important files of the information processing apparatus 1.

According to the information processing apparatus 1 of the first embodiment, the storage area may include a plurality of blocks. In this case, the first and second hash values are calculated based on data stored in a plurality of blocks logically adjacent to each other.

With such a configuration, there is a possibility of avoiding collision of hash values.

According to the information processing apparatus 1 of the first embodiment, the storage area may include a plurality of partial areas logically divided from the storage area with different sizes. In this case, for each of the partial areas having the different sizes, the first hash value is calculated based on data stored in the partial area. For each of partial areas having a first size among the different sizes, the erasure controller 14 calculates the second hash value based on the data stored in the partial area. In a case where the second hash value is different from the first hash value with respect to the partial area having the first size, the erasure controller 14 outputs a verification result indicating that the data stored in the storage device 13 has been successfully erased. In a case where the second hash value is identical to the first hash value with respect to the partial area having the first size, the erasure controller 14 calculates, for each of partial areas having a second size among the different sizes, the second hash value based on the data stored in the partial area, the second size being smaller than the first size. In a case where the second hash value is different from the first hash value with respect to the partial area having the second size, the erasure controller 14 outputs a verification result indicating that the data stored in the storage device 13 has been successfully erased.

With such a configuration, even when the collision between the hash value of the original data and the hash value of the current data occurs in a partial area, the collision of the hash values may be avoided by comparing the hash values of a smaller partial area.

According to the information processing apparatus 1 of the first embodiment, the information processing apparatus 1 may be provided with a first display device 18 that outputs the verification result.

With such a configuration, it is possible to recognize whether or not the data stored in the storage device 13 has been successfully erased.

The information processing method of the first embodiment controls erasure of data stored in a storage device 13 having a self-encrypting function. The storage device 13 is provided with: a storage medium having a storage area; a nonvolatile memory 23 storing an encryption key; and an input/output controller 21. The input/output controller 21 writes input data to the storage area, outputs the data read from the storage area, encrypts at least a part of the data to be written to the storage area using the encryption key, and decrypts at least a part of the data read from the storage area using the encryption key. The information processing method includes, in a case where a first encryption key is stored in the nonvolatile memory 23, obtaining a first hash value calculated based on data stored or to be stored at a designated position in the storage area. The information processing method includes, controlling the storage device 13 to change the first encryption key stored in the nonvolatile memory 23 to a second encryption key. The information processing method includes, in a case where the second encryption key is stored in the nonvolatile memory 23, calculating a second hash value based on the data read from the designated position in the storage area. The information processing method includes, in a case where the second hash value is different from the first hash value, outputting a verification result indicating that the data stored in the storage device 13 has been successfully erased. The information processing method includes, in a case where the second hash value is identical to the first hash value, outputting a verification result indicating that erasure of the data stored in the storage device 13 has failed.

With such a configuration, it is possible to verify whether or not the data stored in the storage device 13 has been successfully erased, with a smaller load than the prior art.

According to the program of the first embodiment, the program includes instructions executed by a processor implemented in an information processing apparatus 1. The information processing apparatus 1 is further provided with a storage device 13 having a self-encrypting function of stored data. The storage device 13 is provided with: a storage medium having a storage area, a nonvolatile memory 23 storing an encryption key, and an input/output controller 21. The input/output controller 21 writes input data to the storage area, outputs the data read from the storage area, encrypts at least a part of the data to be written to the storage area using the encryption key, and decrypts at least a part of the data read from the storage area using the encryption key. The instructions cause the processor to execute, in a case where a first encryption key is stored in the nonvolatile memory 23, obtaining a first hash value calculated based on data stored or to be stored at a designated position in the storage area. The instructions cause the processor to execute, controlling the storage device 13 to change the first encryption key stored in the nonvolatile memory 23 to a second encryption key. The instructions cause the processor to execute, in a case where the second encryption key is stored in the nonvolatile memory 23, calculating a second hash value based on the data read from the designated position in the storage area. The instructions cause the processor to execute, in a case where the second hash value is different from the first hash value, outputting a verification result indicating that the data stored in the storage device 13 has been successfully erased. The instructions cause the processor to execute, in a case where the second hash value is identical to the first hash value, outputting a verification result indicating that erasure of the data stored in the storage device 13 has failed.

With such a configuration, it is possible to verify whether or not the data stored in the storage device 13 has been successfully erased, with a smaller load than the prior art.

### [SECOND EMBODIMENT]

In a second embodiment, we will describe a case of displaying the progress of data erasure, while executing the erasure process of the first embodiment (see Fig. 10).

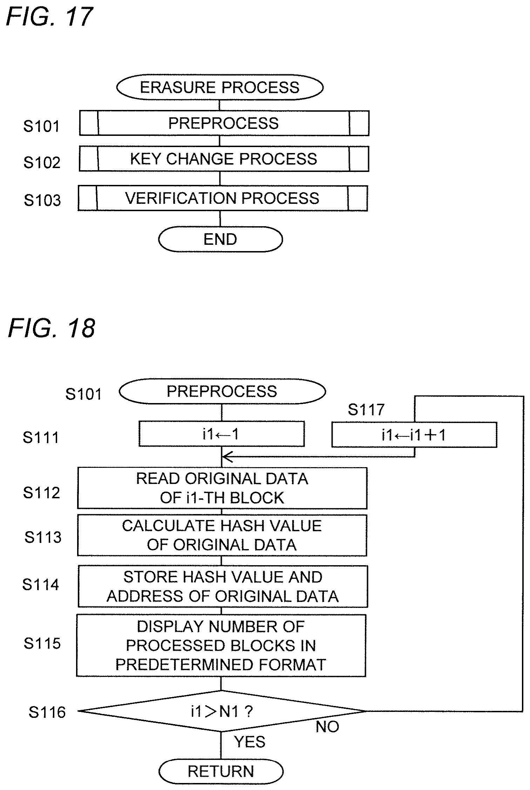

Fig. 17 is a flowchart showing an erasure process executed by an information processing apparatus 1 according to the second embodiment. The information processing apparatus 1 according to the second embodiment is configured in a manner similar to that of the first embodiment. The erasure process of Fig. 17 is, executed by the erasure controller 14 of Fig. 1.

In step S101, the erasure controller 14 executes a preprocess to calculate a hash value of original data of designated logical blocks 31.

In step S102, the erasure controller 14 executes a key change process to change the encryption key stored in the nonvolatile memory 23.

In step S103, the erasure controller 14 executes a verification process to determine whether or not the hash value of the current data is different from the hash value of the original data, that is, whether or not the data has been successfully erased.

Fig. 18 is a flowchart showing a subroutine of the preprocess (step S101) of Fig. 17.

In step S111, the erasure controller 14 initializes a parameter i1 to 1. The parameter i1 indicates one of the logical blocks 31, for example, the logical blocks 31 being designated as shown in Fig. 3, Fig. 8, or Fig. 9. In the example of Fig. 18, N1 logical blocks 31 are designated.

In step S112, the erasure controller 14 reads the original data of the i1-th logical block 31 among the designated logical blocks 31. Then, in step S113, the erasure controller 14 calculates a hash value of the original data. Steps S112 to S113 are similar to steps S31 to S32 of Fig. 10, except for executing on one of the designated logical blocks 31.

In step S114, the erasure controller 14 stores the hash value of the original data, and the address of the i1-th logical block 31, in the RAM 12 or the nonvolatile memory 15 (alternatively, the external storage device 41 of Fig. 16).

In step S115, the erasure controller 14 outputs the number of logical blocks 31 for which steps S112 to S114 have been executed, to a display device 18, in a predetermined format.

In step S116, the erasure controller 14 determines whether or not the parameter i1 exceeds a threshold N1: if YES, the process proceeds to step S102 of Fig. 17; if NO, the process proceeds to step S117.

In step S117, the erasure controller 14 increments the parameter i1 by 1, and repeats steps S112 to S116.

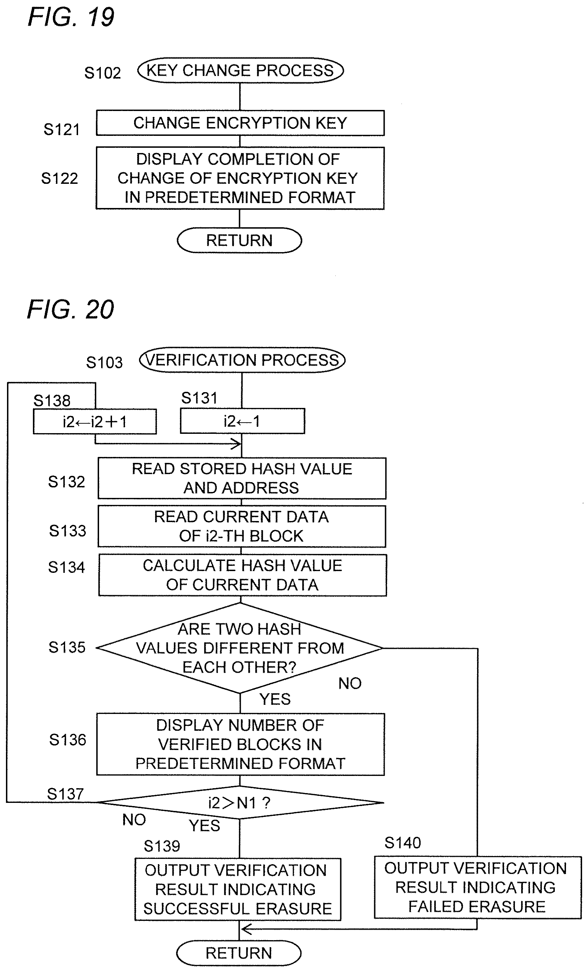

Fig. 19 is a flowchart showing a subroutine of the key change process (step S102) of Fig. 17.

In step S121, the erasure controller 14 changes the encryption key stored in the nonvolatile memory 23. Step S121 is similar to step S33 of Fig. 10.

In step S122, the erasure controller 14 outputs the completion of the change of the encryption key, to the display device 18, in a predetermined format.

Fig. 20 is a flowchart showing a subroutine of the verification process (step S103) of Fig. 17.

In step S131, the erasure controller 14 initializes a parameter i2 to 1. The parameter i2 indicates one of the N1 logical blocks 31 designated in the preprocess of Fig. 18.

In step S132, the erasure controller 14 reads the hash value and the address of the original data stored in the RAM 12 or the nonvolatile memory 15 (alternatively, the external storage device 41 of Fig. 16). The logical block 31 for which the hash value has been calculated in the preprocess is identified based on this address.

In step S133, the erasure controller 14 reads the current data of the i2-th logical block 31 among the logical blocks 31 identified by the address read in step S132. Then, in step S134, the erasure controller 14 calculates a hash value of the current data. Steps S133 to S134 are similar to steps S34 to S35 of Fig. 10, except for executing on one of the designated logical blocks 31.

In step 135, the erasure controller 14 determines whether or not the hash value of the current data is different from the hash value of the original data: if YES, the process proceeds to step S136; if NO, the process proceeds to step 140. Step S135 is similar to step S36 of Fig. 10, except for executing on one of the designated logical blocks 31.

In step S136, the erasure controller 14 outputs the number of verified logical blocks 31 to the display device 18 in a predetermined format. The verified logical blocks 31 are logical blocks 31 for which the erasure controller 14 has determined whether or not the hash value of the current data is different from the hash value of the original data.

In step S137, the erasure controller 14 determines whether or not the parameter i2 exceeds the threshold N1: if YES, the process proceeds to step S139; if NO, the process proceeds to step S138.

In step S138, the erasure controller 14 increments the parameter i2 by 1, and repeats steps S132 to S137.

In step S139, the erasure controller 14 outputs a verification result indicating that the data has been successfully erased, to the display device 18. In step S140, the erasure controller 14 outputs a verification result indicating that the data erasure has failed, to the display device 18.

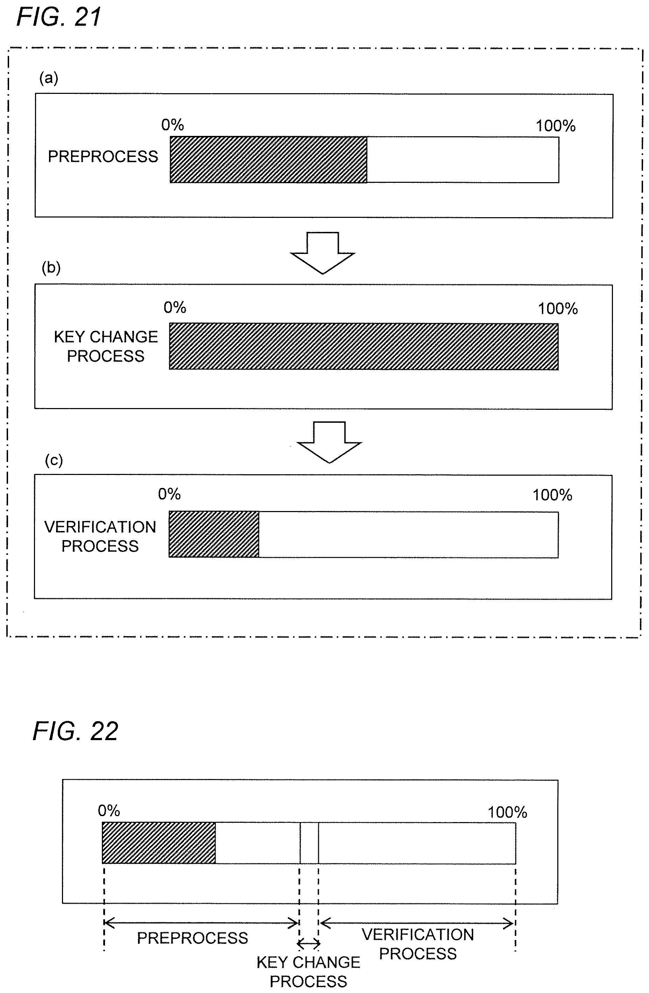

Fig. 21 is a diagram showing an exemplary image showing the progress of data erasure, which is displayed on the display device 18 of Fig. 1 by executing the erasure process of Fig. 17. Fig. 21(a) is an image showing the progress of the preprocess. The progress of the preprocess is represented by, for example, a progress bar indicating a ratio of the number of processed logical blocks 31 to the number of designated logical blocks 31, that is, i1/N1. Fig. 21(b) is an image showing the progress of the key change process. The progress of the key change process is represented by, for example, a progress bar indicating whether or not the encryption key has been changed. Fig. 21(c) is an image showing the progress of the verification process. The progress of the verification process is represented by, for example, a progress bar indicating a ratio of the number of verified logical blocks 31 to the number of designated logical blocks 31, that is, i2/N1.

Fig. 22 is a diagram showing another exemplary image showing the progress of data erasure, which is displayed on the display device 18 of Fig. 1 by executing the erasure process of Fig. 17. The three progress bars shown in Fig. 21 may be combined with each other.

The progress of the data erasure may be displayed as the following text, instead of being displayed as the images as shown in Figs. 21 and 22.

| | |
|---|---|
| Preprocess: | a1 |
| Key change process: | a2 |
| Verification process: | a3 |

Here, "a1" starts from the number of designated blocks, N1, and decreases as the parameter i1 increases (a1 =N1 - i1). "a2" is "1" before changing the encryption key, and "0" after changing the encryption key. "a3" starts from the number of designated blocks, N1, and decreases as the parameter i2 increases (a3 = N1 - i2).

In addition, the progress of the data erasure may be displayed as the following text.

| | |
|---|---|
| Preprocess: | b1/N1 |
| Key change process: | b2 |
| Verification process: | b3/N3 |

Here, b1 = i1. "b2" is "0" before changing the encryption key, and "1" after changing the encryption key. In addition, b3 = i2.

In addition, the progress of the data erasing may be collectively displayed as "c", where c = a1 + a2 + a3. In addition, the progress of the data erasure may be collectively displayed as "d/N", where d = b1 + b2 + b3 and N = N1 × 2 + 1.

In a case where one hash value is calculated per a number of logical blocks 31 as described above, the progress of the data erasure may be displayed as an image or a text based on the number or ratio of unit groups of logical blocks 31, each unit group including logical blocks 31 corresponding to one hash value.

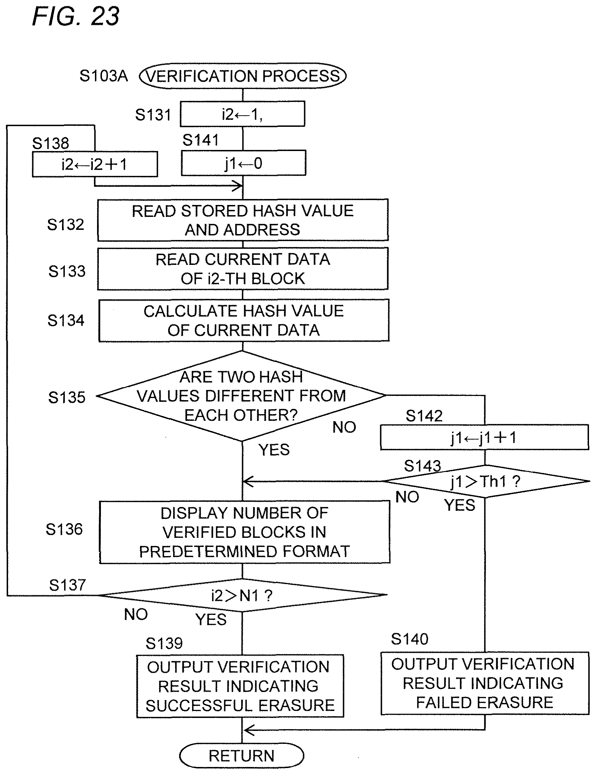

According to the verification process of Fig. 20, in a case where the hash value of the current data is identical to the hash value of the original data in one logical block 31, it is determined that the data erasure has failed. However, the erasure controller 14 may determine that the data has been successfully erased, even when the hash values match in a part of the designated logical blocks 31, as described above. Next, with reference to Figs. 23 to 25, we will describe modifications of the verification process that allow such collision of hash values.

Fig. 23 is a flowchart showing a first modification of the verification process of Fig. 17. The process of Fig. 23 includes steps S141 to S143 in addition to the steps of Fig. 20.

In step S141, the erasure controller 14 initializes a parameter j1 to 0. The parameter j1 is used to count the number of logical blocks 31 in which the hash value of the current data is identical to the hash value of the original data.

When it is determined in step S135 that the hash value of the current data is identical to the hash value of the original data, the process proceeds to step S142. In step S142, the erasure controller 14 increments the parameter j1 by 1.

In step S143, the erasure controller 14 determines whether or not the parameter j1 exceeds a threshold Th1: if YES, the process proceeds to step S140; if NO, the process proceeds to step S136.

According to the verification process of Fig. 23, even when the collisions of the hash values occur in the number of logical blocks 31 equal to or less than the threshold Th1, if the hash values differ in the other logical blocks 31, it can be determined that the data has been successfully erased.

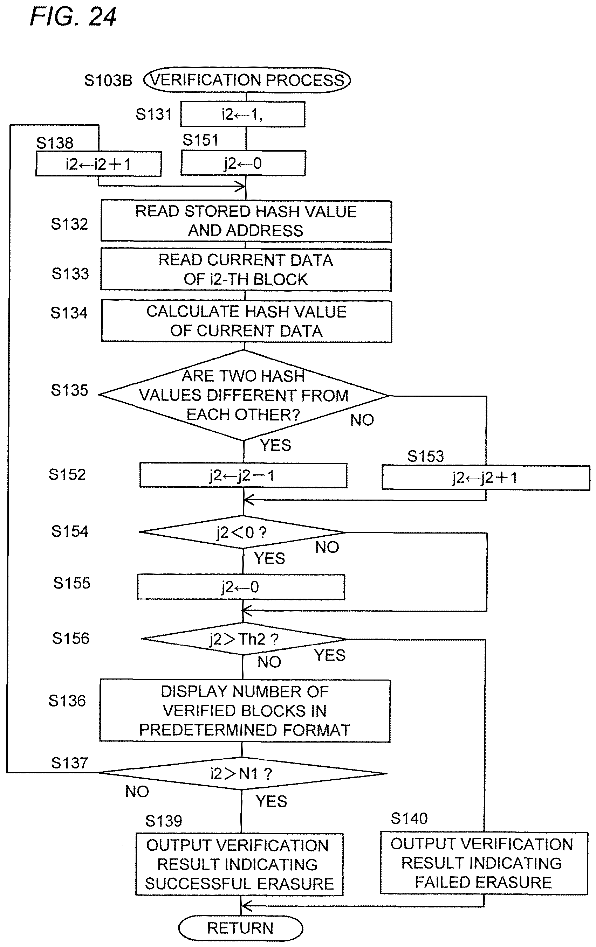

Fig. 24 is a flowchart showing a second modification of the verification process of Fig. 17. The process of Fig. 24 includes steps S151 to S156 in addition to the steps of Fig. 20.

In step S151, the erasure controller 14 initializes a parameter j2 to 0. The parameter j2 is used to count the number of collisions of hash values, the collisions sequentially occurring in several logical blocks 31 close to each other, among the designated logical blocks 31.

When it is determined in step S135 that the hash value of the current data is different from the hash value of the original data, the process proceeds to step S152, and otherwise, the process proceeds to step S153. In step S152, the erasure controller 14 decrements the parameter j2 by 1. In step S153, the erasure controller 14 increments the parameter j2 by 1.

In step S154, the erasure controller 14 determines whether or not the parameter j2 is smaller than 0: if YES, the process proceeds to step S155; if NO, the process proceeds to step S156. In step S155, the erasure controller 14 reinitializes the parameter j2 to 0.

In step S156, the erasure controller 14 determines whether or not the parameter j2 exceeds a threshold Th2: if YES, the process proceeds to step S140; if NO, the process proceeds to step S136.

According to the verification process of Fig. 24, the parameter j2 increases or decreases according to matches or mismatches of the hash values. Therefore, in a case where collisions of hash values sequentially occur in several logical blocks 31 close to each other, among the designated logical blocks 31, the parameter j2 increases. In this case, it is considered that the storage area including these logical blocks 31 is not to be encrypted, and data is stored in plain text. On the other hand, in a case where the matches and mismatches of hash values almost alternately occur in several logical blocks 31 close to each other, among the designated logical blocks 31, the parameter j2 does not increase. In this case, it is considered that the collisions of the hash values are accidental.

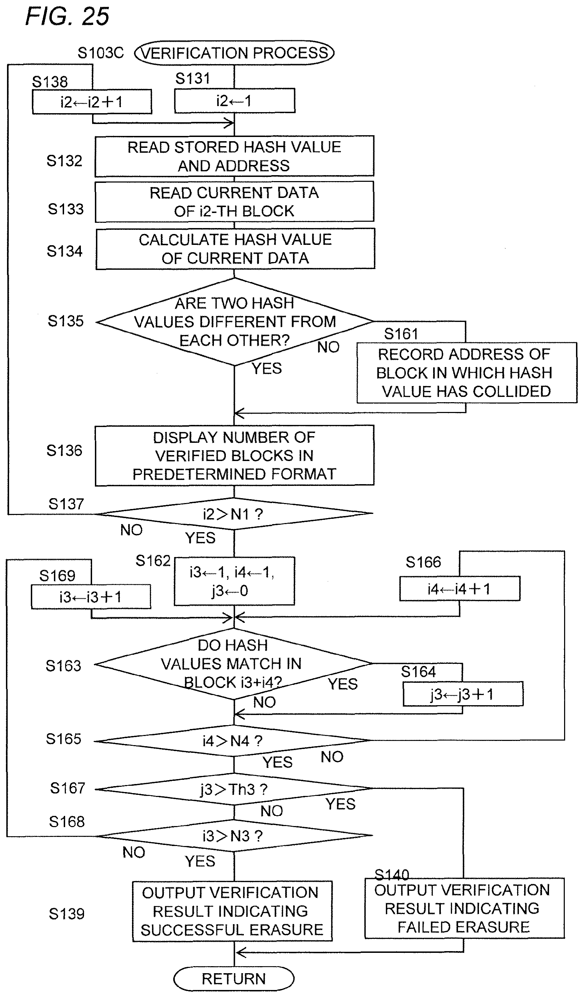

Fig. 25 is a flowchart showing a third modification of the verification process of Fig. 17. The process of Fig. 25 includes steps S161 to S169 in addition to the steps of Fig. 20.

When it is determined in step S135 that the hash value of the current data is identical to the hash value of the original data, the process proceeds to step S161. In step S161, the erasure controller 14 stores the address of the logical block 31 in which the collision of the hash values has occurred, in the RAM 12 or the nonvolatile memory 15 (alternatively, in the external storage device 41 of Fig. 16).

When the parameter i2 exceeds the threshold N1 in step S137, the process proceeds to step S162. In step S162, the erasure controller 14 initializes parameters i3 and i4 to 1, and initializes a parameter j3 to 0. According to the verification process of Fig. 25, the number of collisions of hash values is counted in a group of a predetermined number of logical blocks 31 close to each other, among the designated logical blocks 31. The parameter i3 indicates the position of the group of logical blocks 31. The parameter i4 indicates one of the logical blocks 31 included in a certain group. In the example of Fig. 25, each group includes N4 logical blocks 31, and the position of the group is shifted in N3 = N1 - N4 ways, among the designated logical blocks 31. The parameter j3 is used to count the number of collisions of hash values in a certain group.

In step S163, based on the address stored in step S161, the erasure controller 14 determines whether or not the hash value of the current data is identical to the hash value of the original data in the (i3 + i4)-th logical block 31: if YES, the process proceeds to step S164; if NO, the process proceeds to step S165. In step S164, the erasure controller 14 increments the parameter j3 by 1.

In step S165, the erasure controller 14 determines whether or not the parameter i4 exceeds a threshold N4, that is, whether or not all the logical blocks 31 included in the current group have been processed: if YES, the process proceeds to step S167; if NO, the process proceeds to step S166.

In step S166, the erasure controller 14 increments the parameter i4 by 1, and repeats steps S163 to S165.

In step S167, the erasure controller 14 determines whether or not the parameter j3 exceeds a threshold Th3: if YES, the process proceeds to step S140; if NO, the process proceeds to step S168.

In step S168, the erasure controller 14 determines whether or not the parameter i3 exceeds a threshold N3, that is, whether or not the group of logical blocks 31 has been shifted to all positions: if YES, the process proceeds to step S139; if NO, the process proceeds to step S169.

In step S169, the erasure controller 14 increments the parameter i3 by 1, and repeats steps S163 to S168.

According to the process of Fig. 25, in a case where the collisions of the hash values repeatedly occur in the group of the predetermined number of logical blocks 31 close to each other, it is considered that the storage area including these logical blocks 31 is not to be encrypted, and the data is stored in plain text.

The threshold Th3 of step S167 may be set to, for example, a value close to the number N3 of the logical blocks 31 included in the group. In addition, in step S168, the erasure controller 14 may calculate j3/N3, and in this case, the threshold Th3 may be set to, for example, a value close to 1.

### [ADVANTAGEOUS EFFECTS AND OTHERS OF SECOND EMBODIMENT]

According to the information processing apparatus 1 of the second embodiment, the erasure controller 14 may output a progress of erasure of the data stored in the storage device 13, to the display device 18.

With such a configuration, it is possible to recognize the progress of data erasure.

### [THIRD EMBODIMENT]

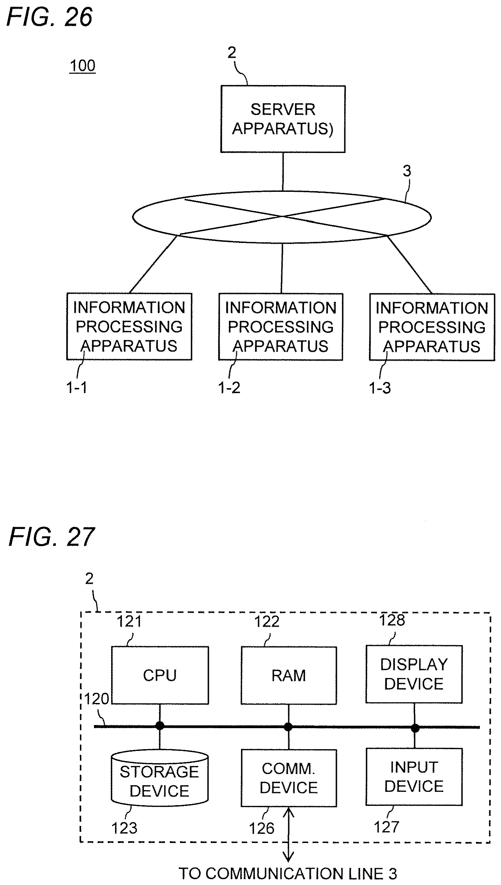

Fig. 26 is a block diagram showing a configuration of an information processing system according to a third embodiment, including an information processing apparatus 1 and a server apparatus. The information processing system of Fig. 26 includes a plurality of information processing apparatuses 1-1 to 1-3, a server apparatus 2, and a communication line 3. Each of the information processing apparatuses 1-1 to 1-3 is configured in a manner similar to that of the information processing apparatus 1 of Fig. 1. The server apparatus 2 is connected to the information processing apparatuses 1-1 to 1-3 via the communication line 3.

In the present description, the information processing apparatuses 1-1 to 1-3 are collectively referred to as "information processing apparatus 1".

Fig. 27 is a block diagram showing a configuration of the server apparatus 2 of Fig. 26. The server apparatus 2 is provided with a bus 120, a CPU 121, a RAM 122, a storage device 123, a communication device 126, an input device 127, and a display device 128. The CPU 121 controls entire operations of the server apparatus 2, and manages erasure of data stored in a storage device 13 of each information processing apparatus 1. The RAM 122 temporarily stores programs and data necessary for the operations of the server apparatus 2. The storage device 123 is a nonvolatile storage medium that stores programs necessary for the operations of the server apparatus 2. The communication device 126 is communicably connected to the information processing apparatuses 1 via the communication line 3. The input device 127 receives user inputs for controlling the operations of the server apparatus 2. The input device 127 includes, for example, a keyboard and a pointing device. The display device 128 displays information related to erasure of data stored in the storage device 13 of each information processing apparatus 1. The CPU 121, the RAM 122, the storage device 123, the communication device 126, the input device 127, and the display device 128 are connected to each other via the bus 120.

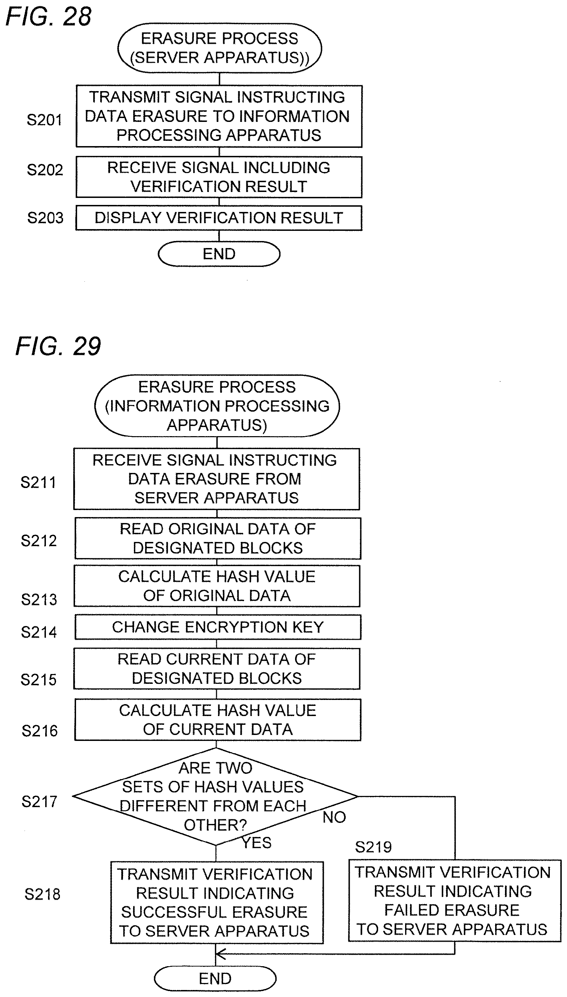

Fig. 28 is a flowchart showing an erasure process executed by the server apparatus 2 of Fig. 26. Fig. 29 is a flowchart showing an erasure process executed by the information processing apparatus 1 of Fig. 26.

In step S201 of Fig. 28, the CPU 121 of the server apparatus 2 transmits a control signal for instructing data erasure, to the information processing apparatus 1.

In step S211 of Fig. 29, the erasure controller 14 of the information processing apparatus 1 receives the control signal for instructing data erasure, from the server apparatus 2. Then, the erasure controller 14 executes steps S212 to S219 according to the control signal. Steps S212 to S217 are similar to steps S31 to S36 of Fig. 10. When it is determined in step S217 that the hash value of the current data is different from the hash value of the original data, the process proceeds to step S218, and otherwise, the process proceeds to step S219. In step S218, the erasure controller 14 transmits a notification signal to the server apparatus 2, the notification signal including a verification result indicating that the data has been successfully erased. In step S219, the erasure controller 14 transmits a notification signal to the server apparatus 2, the notification signal including a verification result indicating that the data erasure has failed.

In step S202 of Fig. 28, the CPU 121 of the server apparatus 2 receives the notification signal indicating the verification result, from the information processing apparatus 1. In step S203, the CPU 121 outputs the verification result to the display device 128.

According to the processes of Figs. 28 and 29, the server apparatus 2 can control erasure of the data stored in the storage devices 13 of the plurality of information processing apparatuses 1, in a concentrated manner, and in addition, it is possible to verify whether or not the data has been successfully erased, with a small load.

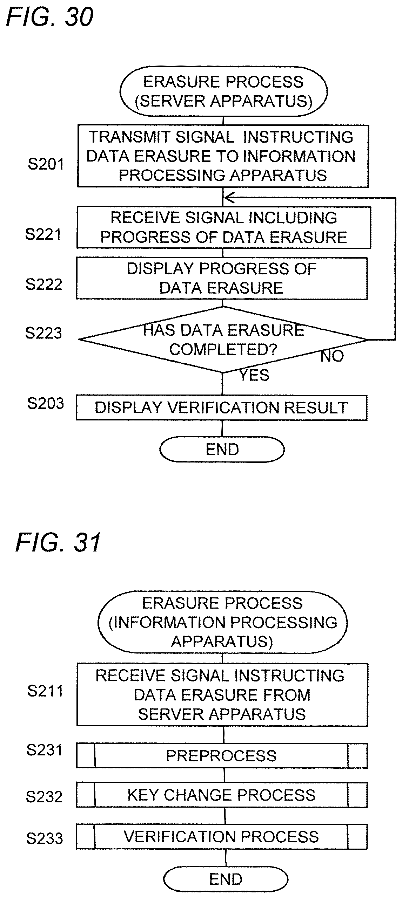

In addition, as described with reference to Figs. 30 to 34, the progress of the data erasure may be outputted to the display device 128 of the server apparatus 2.

Fig. 30 is a flowchart showing a modification of the erasure process executed by the server apparatus 2 of Fig. 26. Fig. 31 is a flowchart showing a modification of the erasure process executed by the information processing apparatus 1 of Fig. 26. The process of Fig. 30 includes steps S221 to S223, instead of step S202 of Fig. 28. The process of Fig. 31 includes steps S231 to S233, instead of steps S212 to S219 of Fig. 29.

In step S201 of Fig. 30, the CPU 121 of the server apparatus 2 transmits a control signal for instructing data erasure, to the information processing apparatus 1.

In step S211 of Fig. 31, the erasure controller 14 of the information processing apparatus 1 receives the control signal for instructing data erasure, from the server apparatus 2. Then, the erasure controller 14 executes steps S231 to S233 according to the control signal. Steps S231 to S233 are similar to steps S101 to S103 of Fig. 17, except for transmitting that the progress of the data erasure and the verification result to the server apparatus 2, instead of outputting them to the display device 18 of the information processing apparatus 1.

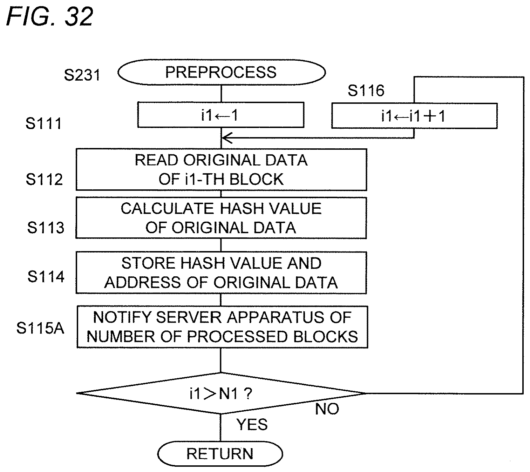

Fig. 32 is a flowchart showing a subroutine of the preprocess (step S231) of Fig. 31. The process of Fig. 32 includes step S115A, instead of step S115 of Fig. 18. In step S115A, the erasure controller 14 transmits a notification signal to the server apparatus 2, the notification signal including the number of logical blocks 31 on which steps S112 to S114 have been executed, as the progress of the data erasure.

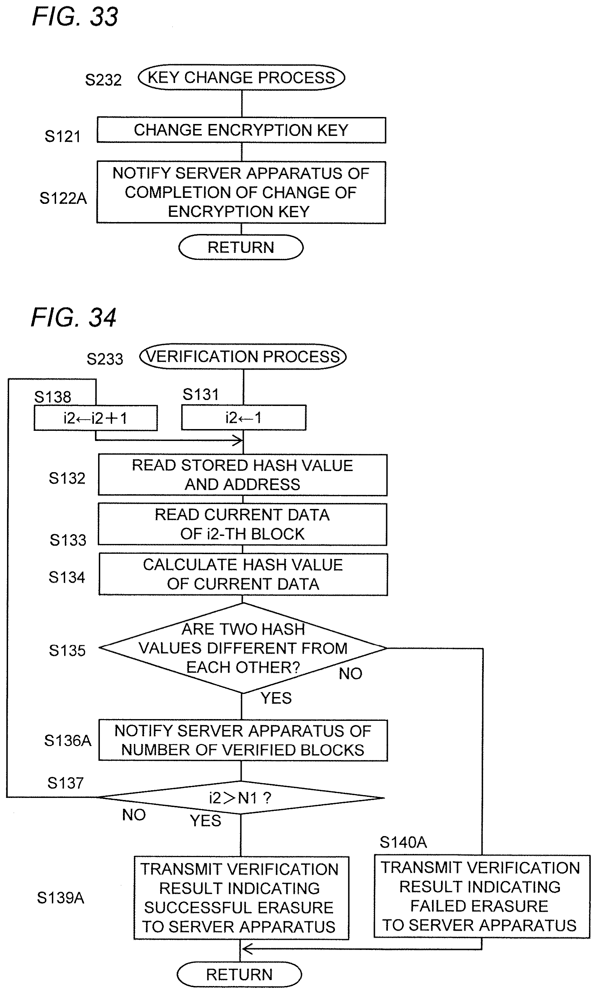

Fig. 33 is a flowchart showing a subroutine of the key change process (step S232) of Fig. 31. The process of Fig. 33 includes step S122A, instead of step S122 of Fig. 19. In step S122A, the erasure controller 14 transmits a notification signal to the server apparatus 2, the notification signal indicating that the encryption key has been changed, as the progress of the data erasure.

Fig. 34 is a flowchart showing a subroutine of the verification process (step S233) of Fig. 31. The process of Fig. 34 includes steps S136A, S139A, and S140A, instead of steps S136, S139, and S140 of Fig. 20. In step S136A, the erasure controller 14 transmits a notification signal to the server apparatus 2, the notification signal including the number of verified logical blocks 31, as the progress of the data erasure. In step S139A, the erasure controller 14 transmits a notification signal to the server apparatus 2, the notification signal including a verification result indicating that the data has been successfully erased. In step S140A, the erasure controller 14 transmits a notification signal to the server apparatus 2, the notification signal including a verification result indicating that the data erasure has failed.

In step S221 of Fig. 30, the CPU 121 of the server apparatus 2 receives the notification signal including the progress of the data erasure, from the information processing apparatus 1. In step S222, the CPU 121 outputs the progress of the data erasure to the display device 128 in a predetermined format, in a manner similar to that of outputting to the display device 18 of the information processing apparatus 1. In step S223, the CPU 121 determines whether or not the data erasure has been completed, that is, whether or not the notification signal indicating the verification result has been received from the information processing apparatus 1: if YES, the process proceeds to step S203; if NO, the process returns to step S221. In step S203, the CPU 121 outputs the verification result to the display device 128.

According to the process of Figs. 30 to 34, the server apparatus 2 can recognize progresses of erasure of the data stored in the storage devices 13 of the plurality of information processing apparatuses 1.

### [ADVANTAGEOUS EFFECTS AND OTHERS OF THIRD EMBODIMENT]

An information processing system 100 of the third embodiment is provided with: the information processing apparatus 1 of the first embodiment, and a server apparatus 2 connected to the information processing apparatus 1 via a communication line. The erasure controller 14 controls erasure of the data stored in the storage device 13, according to a control signal received from the server apparatus 2.

With such a configuration, it is possible to verify whether or not the data stored in the storage device 13 has been successfully erased, with a smaller load than the prior art.

According to the information processing system 100 of the third embodiment, the erasure controller 14 may transmit a first notification signal including the verification result, to the server apparatus 2. The server apparatus 2 may be provided with a display device 128 that outputs the verification result.

With such a configuration, it is possible to recognize whether or not the data stored in the storage device 13 has been successfully erased.

According to the information processing system 100 of the third embodiment, the erasure controller 14 may transmit a second notification signal including a progress of erasure of the data stored in the storage device 13, to the server apparatus 2. In this case, the display device 128 displays the progress.

With such a configuration, it is possible to recognize the progress of data erasure.

### [OTHER EMBODIMENTS]

As described above, the embodiments have been described as examples of the technology disclosed in the present application. However, the technology in the present disclosure is not limited thereto, and is applicable to embodiments with some changes, replacements, additions, omissions, and the like. In addition, new embodiments can be derived by combining the components described in the aforementioned embodiments.

Thus, other embodiments will be exemplified below.

The storage device 13 is not limited to a solid state drive, and may be a nonvolatile storage medium, such as a hard disk drive (HDD), with the self-encrypting function.

The verification result is not limited to being outputted to the display device 18, and may be outputted to an external information processing apparatus via the communication device 16.

Since important data is stored at the logical beginning of the storage area, the erasure controller 14 may always designate 32 bytes at the beginning of the storage area.

The erasure controller 14 may add a salt (predetermined keyword) to the data when calculating a hash value.

The erasure controller 14 may shrink the size of the logical block 31 to, for example, 1/10.

With reference to Figs. 17 to 25 and Figs. 30 to 34, we have described the case of displaying the progress of data erasure, while executing the erasure process according to an implementation example 2 (see Fig. 10). Alternatively, the progress of the data erasure may be similarly displayed, while executing the erasure process according to an implementation example 1 (see Fig. 6) or the erasure process according to an implementation example 3 (see Fig. 11).

As described above, the embodiments have been described as examples of the technology according to the present disclosure. The accompanying drawings and the detailed description have been provided for this purpose.

Accordingly, the components described in the accompanying drawings and the detailed description may include not only components essential to solving the problem, but also components not essential to solving the problem, in order to exemplify the technology. Therefore, even when those non-essential components are described in the accompanying drawings and the detailed description, those non-essential components should not be considered essentials.

In addition, since the above-described embodiments are intended to exemplify the technology of the present disclosure, it is possible to make various changes, replacements, additions, omissions, and the like within the scope of claims or the equivalent thereof.

### [SUMMARY OF EMBODIMENTS]

According to a first aspect of the present disclosure, an information processing apparatus is provided with: a storage device having a self-encrypting function of data to be stored; and an erasure controller that controls erasure of data stored in the storage device. The storage device is provided with: a storage medium having a storage area; a nonvolatile memory storing an encryption key; an input/output controller. The input/output controller writes input data to the storage area, outputs the data read from the storage area, encrypts at least a part of the data to be written to the storage area using the encryption key, and decrypts at least a part of the data read from the storage area using the encryption key. In a case where a first encryption key is stored in the nonvolatile memory, the erasure controller obtains a first hash value calculated based on data stored or to be stored at a designated position in the storage area. The erasure controller controls the storage device to change the first encryption key stored in the nonvolatile memory to a second encryption key. In a case where the second encryption key is stored in the nonvolatile memory, the erasure controller calculates a second hash value based on the data read from the designated position in the storage area. In a case where the second hash value is different from the first hash value, the erasure controller outputs a verification result indicating that the data stored in the storage device has been successfully erased. In a case where the second hash value is identical to the first hash value, the erasure controller outputs a verification result indicating that erasure of the data stored in the storage device has failed.

According to a second aspect of the present disclosure, the information processing apparatus of the first aspect is further configured as follows. The erasure controller controls the storage device to store predetermined pattern data at the designated position in the storage area. The first hash value is calculated based on the pattern data.

According to a third aspect of the present disclosure, the information processing apparatus of the first aspect is further configured as follows. The erasure controller calculates the first hash value based on the data read from the designated position in the storage area.

According to a fourth aspect of the present disclosure, the information processing apparatus of the third aspect is further configured as follows. The storage area includes a plurality of blocks. Per predetermined number of blocks, the first and second hash values are calculated based on data stored in the predetermined number of blocks.

According to a fifth aspect of the present disclosure, the information processing apparatus of one of the first to fourth aspects is further configured as follows. The storage area includes a plurality of partial areas logically divided from the storage area, each of the partial areas including a plurality of logically sequential blocks. For each of the partial areas, the erasure controller designates a number of blocks with a ratio to the blocks included in the partial area, the ratio being different for the partial area. The first and second hash values are calculated based on data stored in the designated blocks.

According to a sixth aspect of the present disclosure, the information processing apparatus of one of the first to fourth aspects is further configured as follows. The storage area includes a plurality of blocks. The first and second hash values are calculated based on data stored in a plurality of blocks logically adjacent to each other.

According to a seventh aspect of the present disclosure, the information processing apparatus of the first aspect is further configured as follows. The storage area includes a plurality of partial areas logically divided from the storage area with different sizes. For each of the partial areas having the different sizes, the first hash value is calculated based on data stored in the partial area. For each of partial areas having a first size among the different sizes, the erasure controller calculates the second hash value based on the data stored in the partial area. In a case where the second hash value is different from the first hash value with respect to the partial area having the first size, the erasure controller outputs a verification result indicating that the data stored in the storage device has been successfully erased. In a case where the second hash value is identical to the first hash value with respect to the partial area having the first size, the erasure controller calculates, for each of partial areas having a second size among the different sizes, the second hash value based on the data stored in the partial area, the second size being smaller than the first size. In a case where the second hash value is different from the first hash value with respect to the partial area having the second size, the erasure controller outputs a verification result indicating that the data stored in the storage device has been successfully erased.

According to an eighth aspect of the present disclosure, the information processing apparatus of one of the first to seventh aspects is further configured as follows. The information processing apparatus is provided with a first display device that outputs the verification result.

According to a ninth aspect of the present disclosure, the information processing apparatus of the eighth aspect is further configured as follows. The erasure controller outputs a progress of erasure of the data stored in the storage device, to the first display device.

According to a tenth aspect of the present disclosure, an information processing system is provided with: the information processing apparatus of one of the first to ninth aspects, and a server apparatus connected to the information processing apparatus via a communication line. The erasure controller controls erasure of the data stored in the storage device, according to a control signal received from the server apparatus.

According to an eleventh aspect of the present disclosure, the information processing system of the tenth aspect is further configured as follows. The erasure controller transmits a first notification signal including the verification result, to the server apparatus. The server apparatus is provided with a second display device that outputs the verification result.

According to a twelfth aspect of the present disclosure, the information processing system of the eleventh aspect is further configured as follows. The erasure controller transmits a second notification signal including a progress of erasure of the data stored in the storage device, to the server apparatus. The second display device displays the progress.

According to a thirteenth aspect of the present disclosure, an information processing method controls erasure of data stored in a storage device having a self-encrypting function. The storage device is provided with: a storage medium having a storage area; a nonvolatile memory storing an encryption key; and an input/output controller. The input/output controller writes input data to the storage area, outputs the data read from the storage area, encrypts at least a part of the data to be written to the storage area using the encryption key, and decrypts at least a part of the data read from the storage area using the encryption key. The information processing method includes, in a case where a first encryption key is stored in the nonvolatile memory, obtaining a first hash value calculated based on data stored or to be stored at a designated position in the storage area. The information processing method includes, controlling the storage device to change the first encryption key stored in the nonvolatile memory to a second encryption key. The information processing method includes, in a case where the second encryption key is stored in the nonvolatile memory, calculating a second hash value based on the data read from the designated position in the storage area. The information processing method includes, in a case where the second hash value is different from the first hash value, outputting a verification result indicating that the data stored in the storage device has been successfully erased. The information processing method includes, in a case where the second hash value is identical to the first hash value, outputting a verification result indicating that erasure of the data stored in the storage device has failed.

According to a fourteenth aspect of the present disclosure, the program includes instructions executed by a processor implemented in an information processing apparatus. The information processing apparatus is further provided with a storage device having a self-encrypting function of stored data. The storage device is provided with: a storage medium having a storage area, a nonvolatile memory storing an encryption key, and an input/output controller. The input/output controller writes input data to the storage area, outputs the data read from the storage area, encrypts at least a part of the data to be written to the storage area using the encryption key, and decrypts at least a part of the data read from the storage area using the encryption key. The instructions cause the processor to execute, in a case where a first encryption key is stored in the nonvolatile memory, obtaining a first hash value calculated based on data stored or to be stored at a designated position in the storage area. The instructions cause the processor to execute, controlling the storage device to change the first encryption key stored in the nonvolatile memory to a second encryption key. The instructions cause the processor to execute, in a case where the second encryption key is stored in the nonvolatile memory, calculating a second hash value based on the data read from the designated position in the storage area. The instructions cause the processor to execute, in a case where the second hash value is different from the first hash value, outputting a verification result indicating that the data stored in the storage device has been successfully erased. The instructions cause the processor to execute, in a case where the second hash value is identical to the first hash value, outputting a verification result indicating that erasure of the data stored in the storage device has failed.

### INDUSTRIAL APPLICABILITY

An information processing apparatus according to an aspect of the present disclosure is useful for verifying whether or not data stored in a storage device having the self-encrypting function has been successfully erased.

### REFERENCE SIGNS LIST

1, 1A: information processing apparatus
10: bus
11: central processing unit (CPU)
12: random access memory (RAM)
13: storage device
14: erasure controller
15: nonvolatile memory
16: communication (COMM.) device
17: input device
18: display device
19: device interface (I/F)
21: input/output (I/O) controller
22: random access memory (RAM)
23: nonvolatile memory
24: flash memory
31: logical block
41: external storage device
100: information processing system
120: bus
121: central processing unit (CPU)
122: random access memory (RAM)
123: storage device
126: communication (COMM.) device
127: input device
128: display device

## Claims

1. An information processing apparatus comprising:
a storage device having a self-encrypting function of data to be stored; and
an erasure controller that controls erasure of data stored in the storage device,
wherein the storage device comprises:
a storage medium having a storage area;
a nonvolatile memory storing an encryption key; and
an input/output controller that writes input data to the storage area, outputs the data read from the storage area, encrypts at least a part of the data to be written to the storage area using the encryption key, and decrypts at least a part of the data read from the storage area using the encryption key,
wherein, in a case where a first encryption key is stored in the nonvolatile memory, the erasure controller obtains a first hash value calculated based on data stored or to be stored at a designated position in the storage area,
wherein the erasure controller controls the storage device to change the first encryption key stored in the nonvolatile memory to a second encryption key,
wherein, in a case where the second encryption key is stored in the nonvolatile memory, the erasure controller calculates a second hash value based on the data read from the designated position in the storage area,
wherein, in a case where the second hash value is different from the first hash value, the erasure controller outputs a verification result indicating that the data stored in the storage device has been successfully erased, and
wherein, in a case where the second hash value is identical to the first hash value, the erasure controller outputs a verification result indicating that erasure of the data stored in the storage device has failed.

2. The information processing apparatus as claimed in claim 1,
wherein the erasure controller controls the storage device to store predetermined pattern data at the designated position in the storage area, and
wherein the first hash value is calculated based on the pattern data.

3. The information processing apparatus as claimed in claim 1,
wherein the erasure controller calculates the first hash value based on the data read from the designated position in the storage area.

4. The information processing apparatus as claimed in claim 3,
wherein the storage area includes a plurality of blocks, and
wherein, per predetermined number of blocks, the first and second hash values are calculated based on data stored in the predetermined number of blocks.

5. The information processing apparatus as claimed in any one of claims 1 to 4,
wherein the storage area includes a plurality of partial areas logically divided from the storage area, each of the partial areas including a plurality of logically sequential blocks,
wherein, for each of the partial areas, the erasure controller designates a number of blocks with a ratio to the blocks included in the partial area, the ratio being different for the partial area, and
wherein the first and second hash values are calculated based on data stored in the designated blocks.

6. The information processing apparatus as claimed in any one of claims 1 to 4,
wherein the storage area includes a plurality of blocks, and
wherein the first and second hash values are calculated based on data stored in a plurality of blocks logically adjacent to each other.

7. The information processing apparatus as claimed in claim 1,
wherein the storage area includes a plurality of partial areas logically divided from the storage area with different sizes,
wherein, for each of the partial areas having the different sizes, the first hash value is calculated based on data stored in the partial area,
wherein, for each of partial areas having a first size among the different sizes, the erasure controller calculates the second hash value based on the data stored in the partial area,
wherein, in a case where the second hash value is different from the first hash value with respect to the partial area having the first size, the erasure controller outputs a verification result indicating that the data stored in the storage device has been successfully erased,
wherein, in a case where the second hash value is identical to the first hash value with respect to the partial area having the first size, the erasure controller calculates, for each of partial areas having a second size among the different sizes, the second hash value based on the data stored in the partial area, the second size being smaller than the first size, and
wherein, in a case where the second hash value is different from the first hash value with respect to the partial area having the second size, the erasure controller outputs a verification result indicating that the data stored in the storage device has been successfully erased.

8. The information processing apparatus as claimed in claim 1, comprising:
a first display device that outputs the verification result.

9. The information processing apparatus as claimed in claim 8,
wherein the erasure controller outputs a progress of erasure of the data stored in the storage device, to the first display device.

10. An information processing system comprising:
the information processing apparatus as claimed in claim 1; and
a server apparatus connected to the information processing apparatus via a communication line,
wherein the erasure controller controls erasure of the data stored in the storage device, according to a control signal received from the server apparatus.

11. The information processing system as claimed in claim 10,
wherein the erasure controller transmits a first notification signal including the verification result, to the server apparatus, and
wherein the server apparatus comprises a second display device that outputs the verification result.

12. The information processing system as claimed in claim 11,
wherein the erasure controller transmits a second notification signal including a progress of erasure of the data stored in the storage device, to the server apparatus, and
wherein the second display device displays the progress.

13. An information processing method of controlling erasure of data stored in a storage device having a self-encrypting function,
wherein the storage device comprises:
a storage medium having a storage area;
a nonvolatile memory storing an encryption key; and
an input/output controller that writes input data to the storage area, outputs the data read from the storage area, encrypts at least a part of the data to be written to the storage area using the encryption key, and decrypts at least a part of the data read from the storage area using the encryption key, and
wherein the information processing method includes steps of:
in a case where a first encryption key is stored in the nonvolatile memory, obtaining a first hash value calculated based on data stored or to be stored at a designated position in the storage area,
controlling the storage device to change the first encryption key stored in the nonvolatile memory to a second encryption key,
in a case where the second encryption key is stored in the nonvolatile memory, calculating a second hash value based on the data read from the designated position in the storage area,
in a case where the second hash value is different from the first hash value, outputting a verification result indicating that the data stored in the storage device has been successfully erased, and
in a case where the second hash value is identical to the first hash value, outputting a verification result indicating that erasure of the data stored in the storage device has failed.

14. A program including instructions executed by a processor implemented in an information processing apparatus,
wherein the information processing apparatus further comprises a storage device having a self-encrypting function of stored data,
wherein the storage device comprises:
a storage medium having a storage area;
a nonvolatile memory storing an encryption key; and
an input/output controller that writes input data to the storage area, outputs the data read from the storage area, encrypts at least a part of the data to be written to the storage area using the encryption key, and decrypts at least a part of the data read from the storage area using the encryption key,
wherein the instructions cause the processor to execute:
in a case where a first encryption key is stored in the nonvolatile memory, obtaining a first hash value calculated based on data stored or to be stored at a designated position in the storage area,
controlling the storage device to change the first encryption key stored in the nonvolatile memory to a second encryption key,
in a case where the second encryption key is stored in the nonvolatile memory, calculating a second hash value based on the data read from the designated position in the storage area,
in a case where the second hash value is different from the first hash value, outputting a verification result indicating that the data stored in the storage device has been successfully erased, and
in a case where the second hash value is identical to the first hash value, outputting a verification result indicating that erasure of the data stored in the storage device has failed.
